# EUROPÄISCHE PATENTSCHRIFT

(11) **EP 0 857 765 B1**
(45) Veröffentlichungstag und Bekanntmachung des Hinweises auf die Patenterteilung: **03.12.2003**
(21) Anmeldenummer: 98810050.9
(22) Anmeldetag: 28.01.1998
(51) Int. Cl.: C09D 5/03, C09D 7/12

(54) **Stabilisatoren für Pulverlacke**
Stabilizing agents for powder paints
Stabilisants pour peintures en poudre

(30) Priorität: 05.02.1997 CH 25197
(43) Veröffentlichungstag der Anmeldung: 12.08.1998
(73) Patentinhaber: Ciba Specialty Chemicals Holding Inc., 4057 Basel (CH)
(72) Erfinder: Laver, Hugh Stephen, 4153 Reinach (CH); Nesvadba, Peter, 1723 Marly (CH)

(56) Entgegenhaltungen:
- GB-A- 2 257 141
- GB-A- 2 281 910

## Beschreibung

Die vorliegende Erfindung betrifft Pulverlackzusammensetzungen enthaltend ein organisches filmbildendes Bindemittel und als Stabilisator mindestens eine Verbindung vom Typ der Benzofuran-2-one, sowie die Verwendung derselben zur Verminderung der Verfärbung von thermisch härtbaren Pulverlacken.

Die Pulverlackierung ist eine bekannte Technologie und beispielsweise in "Ullmann's Encyclopedia of Industrial Chemistry, Fifth, Completely Revised Edition, Volume A 18", Seiten 438 bis 444 (1991) beschrieben. In der Pulverlackierung wird generell ein Pulver unter Luftzufuhr fluidisiert, elektrostatisch aufgeladen und auf ein geerdetes, bevorzugt metallisches Substrat aufgebracht. Anschliessend wird das Substrat erhitzt, wobei das haftende Pulver schmilzt, zusammenfliesst und an der Metalloberfläche einen geschlossenen Film bildet. Weil bei der Pulverlackierung bevorzugt auf Lösungsmittel verzichtet wird, ist diese Technologie speziell umweltfreundlich.

Die Härtung der Pulverlackzusammensetzungen bei erhöhter Temperatur, insbesondere in einem Gasofen, verläuft nicht ohne Schwierigkeiten. Die im Gasofen enthaltenen Stickoxid-Gase verursachen oft eine unerwünschte Verfärbung des Lackes.

Im Stand der Technik werden Pulverlackzusammensetzungen mit einer Mischung von einem sterisch gehinderten Phenol, wie beispielsweise dem Octadecylester der 3-(3,5-Di-tert-butyl-4-hydroxyphenyl)propionsäure, und einem organischen Phosphit, wie beispielsweise Tris-(2,4-di-tert-butyl-phenyl)phosphit, stabilisiert. Mit dieser Stabilisierung wird jedoch bei der Härtung der Pulverlackzusammensetzung bei erhöhter Temperatur, insbesondere in einem Gasofen eine starke unerwünschte Verfärbung des Lackes beobachtet. Diese Verfärbung kann etwas unterdrückt werden, wenn auf das sterisch gehinderte Phenol verzichtet wird und nur mit einem organischen Phosphit stabilisiert wird. Die Stabilisierung des Pulverlackes mit nur einem organischen Phosphit hat aber den Nachteil, dass die Stabilität des Lackes gegenüber oxidativen Angriffen stark vermindert wird.

Es ist auch wünschenswert, Pulverlacke gegen Ueberbrennung zu stabilisieren. Eine solche Ueberbrennung kann beispielsweise stattfinden, wenn das Förderband beim geheizten Ofen stehen bleibt, oder wenn Teile wegen Lackdefekten nochmals lackiert werden müssen.

Die bekannten Stabilisatoren genügen nicht in jeder Hinsicht den hohen Anforderungen, die ein Stabilisator oder ein Gemisch von Stabilisatoren erfüllen soll, insbesondere hinsichtlich der Verfärbung von thermisch härtbaren, insbesondere in Gasöfen härtbaren, Pulverlackzusammensetzungen.

Die Verwendung von Verbindungen vom Typ der Benzofuran-2-one als Stabilisatoren für organische Polymere ist beispielsweise aus U.S. 4,325,863; U.S. 4,388,244; U.S. 5,175,312; U.S. 5,252,643; U.S. 5,216,052; U.S. 5,369,159; U.S. 5,488,117; U.S. 5,356,966; U.S. 5,367,008; U.S. 5,428,162; U.S. 5,428,177 oder U.S. 5,516,920 bekannt.

Es wurde nun gefunden, dass Verbindungen vom Typ der Benzofuran-2-one sich besonders gut als Stabilisatoren zur Verminderung der Verfärbung von thermisch, insbesondere in Gasöfen, härtbaren Pulverlackzusammensetzungen eignen.

Die vorliegende Erfindung betrifft daher Pulverlackzusammensetzungen enthaltend
a) ein organisches filmbildendes Bindemittel, und
b) als Stabilisator mindestens eine Verbindung vom Typ der Benzofuran-2-one.

Von Interesse sind Pulverlackzusammensetzungen, worin die Komponente (b) eine Verbindung der Formel I 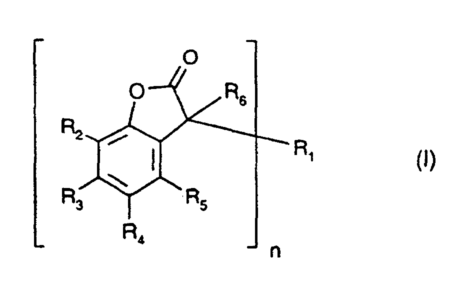 ist, worin, wenn n 1 ist,
R₁ unsubstituiertes oder mit C₁-C₄-Alkyl, C₁-C₄-Alkoxy, C₁-C₄-Alkylthio, Hydroxy, Halogen, Amino, C₁-C₄-Alkylamino, Phenylamino oder Di(C₁-C₄-alkyl)amino substituiertes Naphthyl, Phenanthryl, Anthryl, 5,6,7,8-Tetrahydro-2-naphthyl, 5,6,7,8-Tetrahydro-1-naphthyl, Thienyl, Benzo[b]thienyl, Naphtho[2,3-b]thienyl, Thianthrenyl, Dibenzofuryl, Chromenyl, Xanthenyl, Phenoxathiinyl, Pyrrolyl, Imidazolyl, Pyrazolyl, Pyrazinyl, Pyrimidinyl, Pyridazinyl, Indolizinyl, Isoindolyl, Indolyl, Indazolyl, Purinyl, Chinolizinyl, Isochinolyl, Chinolyl, Phtalazinyl, Naphthyridinyl, Chinoxalinyl, Chinazolinyl, Cinnolinyl, Pteridinyl, Carbazolyl, β-Carbolinyl, Phenanthridinyl, Acridinyl, Perimidinyl, Phenanthrolinyl, Phenazinyl, Isothiazolyl, Phenothiazinyl, Isoxazolyl, Furazanyl, Biphenyl, Terphenyl, Fluorenyl oder Phenoxazinyl darstellt, oder R₁ einen Rest der Formel II 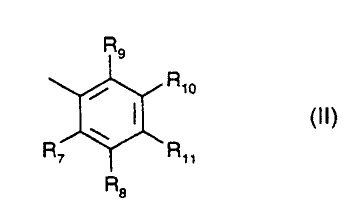 bedeutet, und
wenn n 2 ist,
R₁ unsubstituiertes oder mit C₁-C₄-Alkyl oder Hydroxy substituiertes Phenylen oder Naphthylen; oder -R₁₂-X-R₁₃- darstellt,
R₂, R₃, R₄ und R₅ unabhängig voneinander Wasserstoff, Chlor, Hydroxy, C₁-C₂₅-Alkyl, C₇-C₉-Phenylalkyl, unsubstituiertes oder durch C₁-C₄-Alkyl substituiertes Phenyl; unsubstituiertes oder durch C₁-C₄-Alkyl substituiertes C₅-C₈-Cycloalkyl; C₁-C₁₈-Alkoxy, C₁-C₁₈-Alkylthio, C₁-C₄-Alkylamino, Di-(C₁-C₄-alkyl)amino, C₁-C₂₅-Alkanoyloxy, C₁-C₂₅-Alkanoylamino, C₃-C₂₅-Alkenoyloxy, durch Sauerstoff, Schwefel oder 〉N―R₁₄ unterbrochenes C₃-C₂₅-Alkanoyloxy; C₆-C₉-Cycloalkylcarbonyloxy, Benzoyloxy oder durch C₁-C₁₂-Alkyl substituiertes Benzoyloxy darstellen; oder femer die Reste R₂ und R₃ oder die Reste R₃ und R₄ oder die Reste R₄ und R₅ zusammen mit den Kohlenstoffatomen, an die sie gebunden sind, einen Benzoring bilden, R₄ zusätzlich -(CH₂)ₚ-COR₁₅ oder -(CH₂)_{q}OH darstellt, oder wenn R₃, R₅ und R₆ Wasserstoff sind, R₄ zusätzlich einen Rest der Formel III 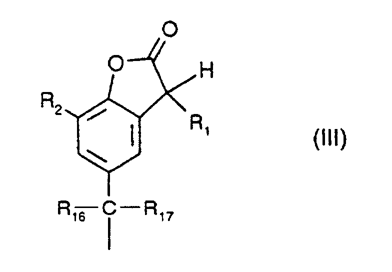 bedeutet, worin R, wie oben für n = 1 angegeben definiert ist,
R₆ Wasserstoff oder einen Rest der Formel IV 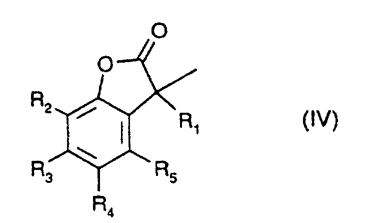 darstellt, wobei R₄ nicht einen Rest der Formel III bedeutet und R₁ wie oben für n = 1 angegeben definiert ist,
R₇, R₈, R₉, R₁₀ und R₁₁ unabhängig voneinander Wasserstoff, Halogen, Hydroxy, C₁-C₂₅-Alkyl, durch Sauerstoff, Schwefel oder 〉N―R₁₄ unterbrochenes C₂-C₂₅-Alkyl; C₁-C₂₅-Alkoxy, durch Sauerstoff, Schwefel oder 〉N―R₁₄ unterbrochenes C₂-C₂₅-Alkoxy; C₁-C₂₅-Alkylthio, C₃-C₂₅-Alkenyl, C₃-C₂₅-Alkenyloxy, C₃-C₂₅-Alkinyl, C₃-C₂₅-Alkinyloxy, C₇-C₉-Phenylalkyl, C₇-C₉-Phenylalkoxy, unsubstituiertes oder durch C₁-C₄-Alkyl substituiertes Phenyl; unsubstituiertes oder durch C₁-C₄-Alkyl substituiertes Phenoxy; unsubstituiertes oder durch C₁-C₄-Alkyl substituiertes C₅-C₈-Cycloalkyl; unsubstituiertes oder durch C₁-C₄-Alkyl substituiertes C₅-C₈-Cycloalkoxy; C₁-C₄-Alkylamino, Di-(C₁-C₄-alkyl)amino, C₁-C₂₅-Alkanoyl durch Sauerstoff, Schwefel oder 〉N―R₁₄ unterbrochenes C₃-C₂₅-Alkanoyl; C₁-C₂₅-Alkanoyloxy, durch Sauerstoff, Schwefel oder 〉N―R₁₄ unterbrochenes C₃-C₂₅-Alkanoyloxy; C₁-C₂₅-Alkanoylamino, C₃-C₂₅-Alkenoyl, durch Sauerstoff, Schwefel oder 〉N―R₁₄ unterbrochenes C₃-C₂₅-Alkenoyl; C₃-C₂₅-Alkenoyloxy, durch Sauerstoff, Schwefel oder 〉N―R₁₄ unterbrochenes C₃-C₂₅-Alkenoyloxy; C₆-C₉-Cycloalkylcarbonyl, C₆-C₉-Cycloalkylcarbonyloxy, Benzoyl oder durch C₁-C₁₂-Alkyl substituiertes Benzoyl; Benzoyloxy oder durch C₁-C₁₂-Alkyl substituiertes Benzoyloxy; 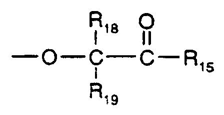 oder 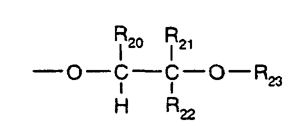 darstellen, oder ferner in Formel II die Reste R₇ und R₈ oder die Reste R₈ und R₁₁ zusammen mit den Kohlenstoffatomen, an die sie gebunden sind, einen Benzoring bilden,
R₁₂ und R₁₃ unabhängig voneinander unsubstituiertes oder durch C₁-C₄-Alkyl substituiertes Phenylen oder Naphthylen darstellen,
R₁₄ Wasserstoff oder C₁-C₈-Alkyl ist,
R₁₅ Hydroxy, 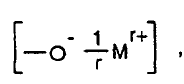 C₁-C₁₈-Alkoxy oder 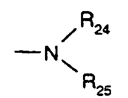 bedeutet,
R₁₆ und R₁₇ unabhängig voneinander Wasserstoff, CF₃, C₁-C₁₂-Alkyl oder Phenyl darstellen, oder R₁₆ und R₁₇ zusammen mit dem C-Atom, an das sie gebunden sind, einen unsubstituierten oder durch 1 bis 3 C₁-C₄-Alkyl substituierten C₅-C₈-Cycloalkylidenring bilden; R₁₈ und R₁₉ unabhängig voneinander Wasserstoff, C₁-C₄-Alkyl oder Phenyl darstellen, R₂₀ Wasserstoff oder C₁-C₄-Alkyl ist,
R₂₁ Wasserstoff, unsubstituiertes oder durch C₁-C₄-Alkyl substituiertes Phenyl; C₁-C₂₅-Alkyl, durch Sauerstoff, Schwefel oder 〉N―R₁₄ unterbrochenes C₂-C₂₅-Alkyl; unsubstituiertes oder am Phenylrest durch 1 bis 3 C₁-C₄-Alkyl substituiertes C₇-C₉-Phenylalkyl; durch Sauerstoff, Schwefel oder 〉N―R₁₄ unterbrochenes unsubstituiertes oder am Phenylrest durch 1 bis 3 C₁-C₄-Alkyl substituiertes C₇-C₂₅-Phenylalkyl bedeutet, oder ferner die Reste R₂₀ und R₂₁ zusammen mit den Kohlenstoffatomen, an die sie gebunden sind, einen unsubstituierten oder durch 1 bis 3 C₁-C₄-Alkyl substituierten C₅-C₁₂-Cycloalkylenring bilden;
R₂₂ Wasserstoff oder C₁-C₄-Alkyl darstellt,
R₂₃ Wasserstoff, C₁-C₂₅-Alkanoyl, C₃-C₂₅-Alkenoyl, durch Sauerstoff, Schwefel oder 〉N―R₁₄ unterbrochenes C₃-C₂₅-Alkanoyl; durch eine Di(C₁-C₆-alkyl)phosphonatgruppe substituiertes C₂-C₂₅-Alkanoyl; C₆-C₉-Cycloalkylcarbonyl, Thenoyl, Furoyl, Benzoyl oder durch C₁-C₁₂-Alkyl substituiertes Benzoyl; 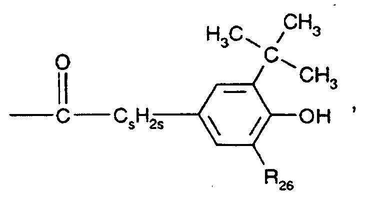 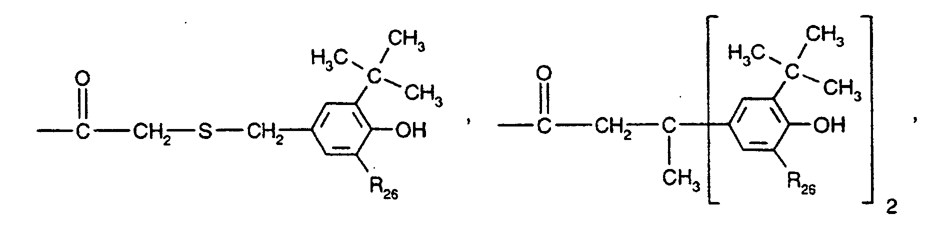 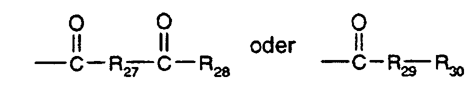 bedeutet,
R₂₄ und R₂₅ unabhängig voneinander Wasserstoff oder C₁-C₁₈-Alkyl darstellen,
R₂₆ Wasserstoff oder C₁-C₈-Alkyl darstellt,
R₂₇ eine direkte Bindung, C₁-C₁₈-Alkylen, durch Sauerstoff, Schwefel oder 〉N―R₁₄ unterbrochenes C₂-C₁₈-Alkylen; C₂-C₁₈-Alkenylen, C₂-C₂₀-Alkyliden, C₇-C₂₀-Phenylalkyliden, C₅-C₈-Cycloalkylen, C₇-C₈-Bicycloalkylen, unsubstituiertes oder durch C₁-C₄-Alkyl substituiertes Phenylen, 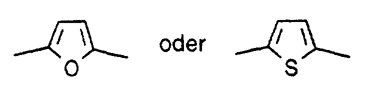 darstellt,
R₂₈ Hydroxy, 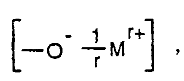 C₁-C₁₈-Alkoxy oder 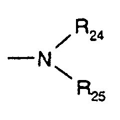 bedeutet,
R₂₉ Sauerstoff, -NH- oder 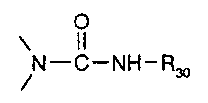 darstellt,
R₃₀ C₁-C₁₈-Alkyl oder Phenyl ist,
R₃₁ Wasserstoff oder C₁-C₁₈-Alkyl bedeutet,
M ein r-wertiges Metallkation ist,
X eine direkte Bindung, Sauerstoff, Schwefel oder -NR₃₁- darstellt,
n 1 oder 2 ist,
p 0, 1 oder 2 bedeutet,
q 1, 2, 3, 4, 5 oder 6 darstellt,
r 1, 2 oder 3 ist, und
s 0, 1 oder 2 bedeutet.

Unsubstituiertes oder mit C₁-C₄-Alkyl, C₁-C₄-Alkoxy, C₁-C₄-Alkylthio, Hydroxy, Halogen, Amino, C₁-C₄-Alkylamino, Phenylamino oder Di(C₁-C₄-alkyl)amino substituiertes Naphthyl, Phenanthryl, Anthryl, 5,6,7,8-Tetrahydro-2-naphthyl, 5,6,7,8-Tetrahydro-1-naphthyl, Thienyl, Benzo[b]thienyl, Naphto[2,3-b]thienyl, Thiathrenyl, Dibenzofuryl, Chromenyl, Xanthenyl, Phenoxathiinyl, Pyrrolyl, Imidazolyl, Pyrazolyl, Pyrazinyl, Pyrimidinyl, Pyridazinyl, Indolizinyl, Isoindolyl, Indolyl, Indazolyl, Purinyl, Chinolizinyl, Isochinolyl, Chinolyl, Phtalazinyl, Naphthyridinyl, Chinoxalinyl, Chinazolinyl, Cinnolinyl, Pteridinyl, Carbazolyl, β-Carbolinyl, Phenanthridinyl, Acridinyl, Perimidinyl, Phenanthrolinyl, Phenazinyl, Isothiazolyl, Phenothiazinyl, Isoxazolyl, Furazanyl, Biphenyl, Terphenyl, Fluorenyl oder Phenoxazinyl bedeutet beispielsweise 1-Naphthyl, 2-Naphthyl, 1-Phenylamino-4-naphthyl, 1-Methylnaphthyl, 2-Methylnaphthyl, 1-Methoxy-2-naphthyl, 2-Methoxy-1-naphthyl, 1-Dimethylamino-2-naphthyl, 1,2-Di-methyl-4-naphthyl, 1,2-Dimethyl-6-naphthyl, 1,2-Dimethyl-7-naphthyl, 1,3-Dimethyl-6-naphthyl, 1,4-Dimethyl-6-naphthyl, 1,5-Dimethyl-2-naphthyl, 1,6-Dimethyl-2-naphthyl, 1-Hydroxy-2-naphthyl, 2-Hydroxy-1-naphthyl, 1,4-Dihydroxy-2-naphthyl, 7-Phenanthryl, 1-Anthryl, 2-Anthryl, 9-Anthryl, 3-Benzo[b]thienyl, 5-Benzo[b]thienyl, 2-Benzo[b]thienyl, 4-Dibenzofuryl, 4,7-Dibenzofuryl, 4-Methyl-7-dibenzofuryl, 2-Xanthenyl, 8-Methyl-2-xanthenyl, 3-Xanthenyl, 2-Phenoxathiinyl, 2,7-Phenoxathiinyl, 2-Pyrrolyl, 3-Pyrrolyl, 5-Methyl-3-pyrrolyl, 2-Imidazolyl, 4-Imidazolyl, 5-Imidazolyl, 2-Methyl-4-imidazolyl, 2-Ethyl-4-imidazolyl, 2-Ethyl-5-imidazolyl, 3-Pyrazolyl, 1-Methyl-3-pyrazolyl, 1-Propyl-4-pyrazolyl, 2-Pyrazinyl, 5,6-Dimethyl-2-pyrazinyl, 2-Indolizinyl, 2-Methyl-3-isoindolyl, 2-Methyl-1-isoindolyl, 1-Methyl-2-indolyl, 1-Methyl-3-indolyl, 1,5-Dimethyl-2-indolyl, 1-Methyl-3-indazolyl, 2,7-dimethyl-8-purinyl, 2-Methoxy-7-methyl-8-purinyl, 2-Chinolizinyl, 3-lsochinolyl, 6-lsochinolyl, 7-lsochinolyl, Isochinolyl, 3-Methoxy-6-isochinolyl, 2-Chinolyl, 6-Chinolyl, 7-Chinolyl, 2-Methoxy-3-chinolyl, 2-Methoxy-6-chinolyl, 6-Phtalazinyl, 7-Phtalazinyl, 1-Methoxy-6-phtalazinyl, 1,4-Dimethoxy-6-phtalazinyl, 1,8-Naphthyridin-2-yl, 2-Chinoxalinyl, 6-Chinoxalinyl, 2,3-Dimethyl-6-chinoxalinyl, 2,3-Dimethoxy-6-chinoxalinyl, 2-Chinazolinyl, 7-Chinazolinyl, 2-Dimethylamino-6-chinazolinyl, 3-Cinnolinyl, 6- Cinnolinyl, 7-Cinnolinyl, 3-Methoxy-7-cinnolinyl, 2-Pteridinyl, 6-Pteridinyl, 7-Pteridinyl, 6,7-Dimethoxy-2-pteridinyl, 2-Carbazolyl, 3-Carbazolyl, 9-Methyl-2-Carbazolyl, 9-Methyl-3-Carbazolyl, β-Carbolin-3-yl, 1-Methyl-β-carbolin-3-yl, 1-Methyl-β-Carbolin-6-yl, 3-Phenanthridinyl, 2-Acridinyl, 3-Acridinyl, 2-Perimidinyl, 1-Methyl-5-perimidinyl, 5-Phenanthrolinyl, 6-Phenanthrolinyl, 1-Phenazinyl, 2-Phenazinyl, 3-Isothiazolyl, 4-Isothiazolyl, 5-lsothiazolyl, 2-Phenothiazinyl, 3-Phenothiazinyl, 10-Methyl-3-phenothiazinyl, 3-lsoxazolyl, 4-Isoxazolyl, 5-Isoxazolyl, 4-Methyl-3-furazanyl, 2-Phenoxazinyl oder 10-Methyl-2-phenoxazinyl.

Besonders bevorzugt sind unsubstituiertes oder mit C₁-C₄-Alkyl, C₁-C₄-Alkoxy, C₁-C₄-Alkylthio, Hydroxy, Phenylamino oder Di(C₁-C₄-alkyl)amino substituiertes Naphthyl, Phenanthryl, Anthryl, 5,6,7,8-Tetrahydro-2-naphthyl, 5,6,7,8-Tetrahydro-1-naphthyl, Thienyl, Benzo[b]-thienyl, Naphto[2,3-b]thienyl, Thiathrenyl, Dibenzofuryl, Chromenyl, Xanthenyl, Phenoxathiinyl, Pyrrolyl, Isoindolyl, Indolyl, Phenothiazinyl, Biphenyl, Terphenyl, Fluorenyl oder Phenoxazinyl wie beispielsweise 1-Naphthyl, 2-Naphthyl, 1-Phenylamino-4-naphthyl, 1-Methylnaphthyl, 2-Methylnaphthyl, 1-Methoxy-2-naphthyl, 2-Methoxy-1-naphthyl, 1-Dimethylamino-2-naphthyl, 1,2-Dimethyl-4-naphthyl, 1,2-Dimethyl-6-naphthyl, 1,2-Dimethyl-7-naphthyl, 1,3-Dimethyl-6-naphthyl, 1,4-Dimethyl-6-naphthyl, 1,5-Dimethyl-2-naphthyl, 1,6-Dimethyl-2-naphthyl, 1-Hydroxy-2-naphthyl, 2-Hydroxy-1-naphthyl, 1,4-Dihydroxy-2-naphthyl, Phenanthryl, 1-Anthryl, 2-Anthryl, 9-Anthryl, 3-Benzo[b]thienyl, 5-Benzo[b]thienyl, 2-Benzo[b]-thienyl, 4-Dibenzofuryl, 4,7-Dibenzofuryl, 4-Methyl-7-dibenzofuryl, 2-Xanthenyl, 8-Methyl-2-xanthenyl, 3-Xanthenyl, 2-Pyrrolyl, 3-Pyrrolyl, 2-Phenothiazinyl, 3-Phenothiazinyl, 10-Methyl-3-phenothiazinyl.

Halogen bedeutet beispielsweise Chlor, Brom oder lod. Bevorzugt ist Chlor.

Alkanoyl mit bis zu 25 Kohlenstoffatomen bedeutet einen verzweigten oder unverzweigten Rest wie beispielsweise Formyl, Acetyl, Propionyl, Butanoyl, Pentanoyl, Hexanoyl, Heptanoyl, Octanoyl, Nonanoyl, Decanoyl, Undecanoyl, Dodecanoyl, Tridecanoyl, Tetradecanoyl, Pentadecanoyl, Hexadecanoyl, Heptadecanoyl, Octadecanoyl, Eicosanoyl oder Docosanoyl. Bevorzugt ist Alkanoyl mit 2 bis 18, insbesondere 2 bis 12, z.B. 2 bis 6 Kohlenstoffatomen. Besonders bevorzugt ist Acetyl.

Durch eine Di(C₁-C₆-alkyl)phosphonatgruppe substituiertes C₂-C₂₅-Alkanoyl bedeutet beispielsweise (CH₃CH₂O)₂POCH₂CO-, (CH₃O)₂POCH₂CO-, (CH₃CH₂CH₂CH₂O)₂POCH₂CO-, (CH₃CH₂O)₂POCH₂CH₂CO-, (CH₃O)₂POCH₂CH₂CO-, (CH₃CH₂CH₂CH₂O)₂POCH₂CH₂CO-, (CH₃CH₂O)₂PO(CH₂)₄CO-, (CH₃CH₂O)₂PO(CH₂)₈CO-oder (CH₃CH₂O)₂PO(CH₂)₁₇CO-.

Alkanoyloxy mit bis zu 25 Kohlenstoffatomen bedeutet einen verzweigten oder unverzweigten Rest wie beispielsweise Formyloxy, Acetoxy, Propionyloxy, Butanoyloxy, Pentanoyloxy, Hexanoyloxy, Heptanoyloxy, Octanoyloxy, Nonanoyloxy, Decanoyloxy, Undecanoyloxy, Dodecanoyloxy, Tridecanoyloxy, Tetradecanoyloxy, Pentadecanoyloxy, Hexadecanoyloxy, Heptadecanoyloxy, Octadecanoyloxy, Eicosanoyloxy oder Docosanoyloxy. Bevorzugt ist Alkanoyloxy mit 2 bis 18, insbesondere 2 bis 12, z.B. 2 bis 6 Kohlenstoffatomen. Besonders bevorzugt ist Acetoxy.

Alkenoyl mit 3 bis 25 Kohlenstoffatomen bedeutet einen verzweigten oder unverzweigten Rest wie beispielsweise Propenoyl, 2-Butenoyl, 3-Butenoyl, Isobutenoyl, n-2,4-Pentadienoyl, 3-Methyl-2-butenoyl, n-2-Octenoyl, n-2-Dodecenoyl, iso-Dodecenoyl, Oleoyl, n-2-Octadecenoyl oder n-4-Octadecenoyl. Bevorzugt ist Alkenoyl mit 3 bis 18, insbesondere 3 bis 12, z.B. 3 bis 6, vor allem 3 bis 4 Kohlenstoffatomen.

Durch Sauerstoff, Schwefel oder 〉N―R₁₄ unterbrochenes C₃-C₂₅-Alkenoyl bedeutet beispielsweise CH₃OCH₂CH₂CH=CHCO- oder CH₃OCH₂CH₂OCH=CHCO-.

Alkenoyloxy mit 3 bis 25 Kohlenstoffatomen bedeutet einen verzweigten oder unverzweigten Rest wie beispielsweise Propenoyloxy, 2-Butenoyloxy, 3-Butenoyloxy, Isobutenoyloxy, n-2,4-Pentadienoyloxy, 3-Methyl-2-butenoyloxy, n-2-Octenoyloxy, n-2-Dodecenoyloxy, iso-Dodecenoyloxy, Oleoyloxy, n-2-Octadecenoyloxy oder n-4-Octadecenoyloxy. Bevorzugt ist Alkenoyloxy mit 3 bis 18, insbesondere 3 bis 12, z.B. 3 bis 6, vor allem 3 bis 4 Kohlenstoffatomen.

Durch Sauerstoff, Schwefel oder 〉N―R₁₄ unterbrochenes C₃-C₂₅-Alkenoyloxy bedeutet beispielsweise CH₃OCH₂CH₂CH=CHCOO- oder CH₃OCH₂CH₂OCH=CHCOO-.

Durch Sauerstoff, Schwefel oder 〉N―R₁₄ unterbrochenes C₃-C₂₅-Alkanoyl bedeutet beispielsweise CH₃-O-CH₂CO-, CH₃-S-CH₂CO-, CH₃-NH-CH₂CO-, CH₃-N(CH₃)-CH₂CO-, CH₃-O-CH₂CH₂-O-CH₂CO-, CH₃-(O-CH₂CH₂-)₂O-CH₂CO-, CH₃-(O-CH₂CH₂-)₃O-CH₂COoder CH₃-(O-CH₂CH₂-)₄O-CH₂CO-.

Durch Sauerstoff, Schwefel oder 〉N―R₁₄ unterbrochenes C₃-C₂₅-Alkanoyloxy bedeutet beispielsweise CH₃-O-CH₂COO-, CH₃-S-CH₂COO-, CH₃-NH-CH₂COO-, CH₃-N(CH₃)-CH₂COO-, CH₃-O-CH₂CH₂-O-CH₂COO-, CH₃-(O-CH₂CH₂-)₂O-CH₂COO-, CH₃-(O-CH₂CH₂-)₃O-CH₂COO- oder CH₃-(O-CH₂CH₂-)₄O-CH₂COO-.

C₆-C₉-Cycloalkylcarbonyl bedeutet beispielsweise Cyclohexylcarbonyl, Cycloheptylcarbonyl oder Cyclooctylcarbonyl. Cyclohexylcarbonyl ist bevorzugt.

C₆-C₉-Cycloalkylcarbonyloxy bedeutet beispielsweise Cyclohexylcarbonyloxy, Cycloheptylcarbonyloxy oder Cyclooctylcarbonyloxy. Cyclohexylcarbonyloxy ist bevorzugt.

Durch C₁-C₁₂-Alkyl substituiertes Benzoyl, das vorzugsweise 1 bis 3, insbesondere 1 oder 2 Alkylgruppen trägt, bedeutet beispielsweise o-, m- oder p-Methylbenzoyl, 2,3-Dimethylbenzoyl, 2,4-Dimethylbenzoyl, 2,5-Dimethylbenzoyl, 2,6-Dimethylbenzoyl, 3,4-Dimethylbenzoyl, 3,5-Dimethylbenzoyl, 2-Methyl-6-ethylbenzoyl, 4-tert-Butylbenzoyl, 2-Ethylbenzoyl, 2,4,6-Trimethylbenzoyl, 2,6-Dimethyl-4-tert-butylbenzoyl oder 3,5-Di-tert-butylbenzoyl. Bevorzugte Substituenten sind C₁-C₈-Alkyl, insbesondere C₁-C₄-Alkyl.

Durch C₁-C₁₂-Alkyl substituiertes Benzoyloxy, das vorzugsweise 1 bis 3, insbesondere 1 oder 2 Alkylgruppen trägt, bedeutet beispielsweise o-, m- oder p-Methylbenzoyloxy, 2,3-Dimethylbenzoyloxy, 2,4-Dimethylbenzoyloxy, 2,5-Dimethylbenzoyloxy, 2,6-Dimethylbenzoyloxy, 3,4-Dimethylbenzoyloxy, 3,5-Dimethylbenzoyloxy, 2-Methyl-6-ethylbenzoyloxy, 4-tert-Butylbenzoyloxy, 2-Ethylbenzoyloxy, 2,4,6-Trimethylbenzoyloxy, 2,6-Dimethyl-4-tert-butylbenzoyloxy oder 3,5-Di-tert-butylbenzoyloxy. Bevorzugte Substituenten sind C₁-C₈-Alkyl, insbesondere C₁-C₄-Alkyl.

Alkyl mit bis zu 25 Kohlenstoffatomen bedeutet einen verzweigten oder unverzweigten Rest wie beispielsweise Methyl, Ethyl, Propyl, Isopropyl, n-Butyl, sec-Butyl, Isobutyl, tert-Butyl, 2-Ethylbutyl, n-Pentyl, Isopentyl, 1-Methylpentyl, 1,3-Dimethylbutyl, n-Hexyl, 1-Methylhexyl, n-Heptyl, Isoheptyl, 1,1,3,3-Tetramethylbutyl, 1-Methylheptyl, 3-Methylheptyl, n-Octyl, 2-Ethylhexyl, 1,1,3-Trimethylhexyl, 1,1,3,3-Tetramethylpentyl, Nonyl, Decyl, Undecyl, 1-Methylundecyl, Dodecyl, 1,1,3,3,5,5-Hexamethylhexyl, Tridecyl, Tetradecyl, Pentadecyl, Hexadecyl, Heptadecyl, Octadecyl, Eicosyl oder Docosyl. Eine der bevorzugten Bedeutungen von R₂ und R₄ ist beispielweise C₁-C₁₈-Alkyl. Eine besonders bevorzugte Bedeutung von R₄ ist C₁-C₄-Alkyl.

Alkenyl mit 3 bis 25 Kohlenstoffatomen bedeutet einen verzweigten oder unverzweigten Rest wie beispielsweise Propenyl, 2-Butenyl, 3-Butenyl, Isobutenyl, n-2,4-Pentadienyl, 3-Methyl-2-butenyl, n-2-Octenyl, n-2-Dodecenyl, iso-Dodecenyl, Oleyl, n-2-Octadecenyl oder n-4-Octadecenyl. Bevorzugt ist Alkenyl mit 3 bis 18, insbesondere 3 bis 12, z.B. 3 bis 6, vor allem 3 bis 4 Kohlenstoffatomen.

Alkenyloxy mit 3 bis 25 Kohlenstoffatomen bedeutet einen verzweigten oder unverzweigten Rest wie beispielsweise Propenyloxy, 2-Butenyloxy, 3-Butenyloxy, Isobutenyloxy, n-2,4-Pentadienyloxy, 3-Methyl-2-butenyloxy, n-2-Octenyloxy, n-2-Dodecenyloxy, iso-Dodecenyloxy, Oleyloxy, n-2-Octadecenyloxy oder n-4-Octadecenyloxy. Bevorzugt ist Alkenyloxy mit 3 bis 18, insbesondere 3 bis 12, z.B. 3 bis 6, vor allem 3 bis 4 Kohlenstoffatomen.

Alkinyl mit 3 bis 25 Kohlenstoffatomen bedeutet einen verzweigten oder unverzweigten Rest wie beispielsweise Propinyl ( ―CH₂-C≡CH ), 2-Butinyl, 3-Butinyl, n-2-Octinyl, oder n-2-Dodecinyl. Bevorzugt ist Alkinyl mit 3 bis 18, insbesondere 3 bis 12, z.B. 3 bis 6, vor allem 3 bis 4 Kohlenstoffatomen.

Alkinyloxy mit 3 bis 25 Kohlenstoffatomen bedeutet einen verzweigten oder unverzweigten Rest wie beispielsweise Propinyloxy ( ―OCH₂-C≡CH ) 2-Butinyloxy, 3-Butinyloxy, n-2-Octinyloxy, oder n-2-Dodecinyloxy. Bevorzugt ist Alkinyloxy mit 3 bis 18, insbesondere 3 bis 12, z.B. 3 bis 6, vor allem 3 bis 4 Kohlenstoffatomen.

Durch Sauerstoff, Schwefel oder 〉N-R₁₄ unterbrochenes C₂-C₂₅-Alkyl bedeutet beispielsweise CH₃-O-CH₂-, CH₃-S-CH₂-, CH₃-NH-CH₂-, CH₃-N(CH₃)-CH₂-, CH₃-O-CH₂CH₂-O-CH₂-, CH₃-(O-CH₂CH₂-)₂O-CH₂-, CH₃-(O-CH₂CH₂-)₃O-CH₂- oder CH₃-(O-CH₂CH₂-)₄O-CH₂-.

C₇-C₉-Phenylalkyl bedeutet beispielsweise Benzyl, α-Methylbenzyl, α,α-Dimethylbenzyl oder 2-Phenylethyl. Benzyl und α,α-Dimethylbenzyl ist bevorzugt.

Unsubstituiertes oder am Phenylrest durch 1 bis 3 C₁-C₄-Alkyl substituiertes C₇-C₉-Phenylalkyl bedeutet beispielsweise Benzyl, α-Methylbenzyl, α,α-Dimethylbenzyl, 2-Phenylethyl, 2-Methylbenzyl, 3-Methylbenzyl, 4-Methylbenzyl, 2,4-Dimethylbenzyl, 2,6-Dimethylbenzyl oder 4-tert-Butylbenzyl. Benzyl ist bevorzugt.

Durch Sauerstoff, Schwefel oder 〉N―R₁₄ unterbrochenes unsubstituiertes oder am Phenylrest durch 1 bis 3 C₁-C₄-Alkyl substituiertes C₇-C₂₅-Phenylalkyl bedeutet einen verzweigten oder unverzweigten Rest wie beispielsweise Phenoxymethyl, 2-Methyl-phenoxy-methyl, 3-Methyl-phenoxymethyl, 4-Methyl-phenoxymethyl, 2,4-Dimethyl-phenoxymethyl, 2,3-Dimethyl-phenoxymethyl, Phenylthiomethyl, N-Methyl-N-phenyl-methyl, N-Ethyl-N-phenyl-methyl, 4-tert-Butyl-phenoxymethyl, 4-tert-Butyl-phenoxyethoxy-methyl, 2,4-Di-tert-butylphenoxymethyl, 2,4-Di-tert-butyl-phenoxyethoxymethyl, Phenoxyethoxyethoxyethoxymethyl, Benzyloxymethyl, Benzyloxyethoxymethyl, N-Benzyl-N-ethyl-methyl oder N-Benzyl-N-isopropyl-methyl.

C₇-C₉-Phenylalkoxy bedeutet beispielsweise Benzyloxy, α-Methylbenzyloxy, α,α-Dimethylbenzyloxy oder 2-Phenylethoxy. Benzyloxy ist bevorzugt.

Durch C₁-C₄-Alkyl substituiertes Phenyl, das vorzugsweise 1 bis 3, insbesondere 1 oder 2 Alkylgruppen enthält, bedeutet beispielsweise o-, m- oder p-Methylphenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 4-tert-Butylphenyl, 2-Ethylphenyl oder 2,6-Diethylphenyl.

Durch C₁-C₄-Alkyl substituiertes Phenoxy, das vorzugsweise 1 bis 3, insbesondere 1 oder 2 Alkylgruppen enthält, bedeutet beispielsweise o-, m- oder p-Methylphenoxy, 2,3-Dimethylphenoxy, 2,4-Dimethylphenoxy, 2,5-Dimethylphenoxy, 2,6-Dimethylphenoxy, 3,4-Dimethylphenoxy, 3,5-Dimethylphenoxy, 2-Methyl-6-ethylphenoxy, 4-tert-Butylphenoxy, 2-Ethylphenoxy oder 2,6-Diethylphenoxy.

Unsubstituiertes oder durch C₁-C₄-Alkyl substituiertes C₅-C₈-Cycloalkyl bedeutet beispielsweise Cyclopentyl, Methylcyclopentyl, Dimethylcyclopentyl, Cyclohexyl, Methylcyclohexyl, Dimethylcyclohexyl, Trimethylcyclohexyl, tert-Butylcyclohexyl, Cycloheptyl oder Cyclooctyl. Bevorzugt ist Cyclohexyl und tert-Butylcyclohexyl.

Unsubstituiertes oder durch C₁-C₄-Alkyl substituiertes C₅-C₈-Cycloalkoxy bedeutet beispielsweise Cyclopentoxy, Methylcyclopentoxy, Dimethylcyclopentoxy, Cyclohexoxy, Methylcyclohexoxy, Dimethylcyclohexoxy, Trimethylcyclohexoxy, tert-Butylcyclohexoxy, Cycloheptoxy oder Cyclooctoxy. Bevorzugt ist Cyclohexoxy und tert-Butylcyclohexoxy.

Alkoxy mit bis zu 25 Kohlenstoffatomen bedeutet einen verzweigten oder unverzweigten Rest wie beispielsweise Methoxy, Ethoxy, Propoxy, Isopropoxy, n-Butoxy, Isobutoxy, Pentoxy, Isopentoxy, Hexoxy, Heptoxy, Octoxy, Decyloxy, Tetradecyloxy, Hexadecyloxy oder Octadecyloxy. Bevorzugt ist Alkoxy mit 1 bis 12, insbesondere 1 bis 8, z.B. 1 bis 6 Kohlenstoffatomen.

Durch Sauerstoff, Schwefel oder 〉N―R₁₄ unterbrochenes C₂-C₂₅-Alkoxy bedeutet beispielsweise CH₃-O-CH₂CH₂O-, CH₃-S-CH₂CH₂O-, CH₃-NH-CH₂CH₂O-, CH₃-N(CH₃)-CH₂CH₂O-, CH₃-O-CH₂CH₂-O-CH₂CH₂O-, CH₃-(O-CH₂CH₂-)₂O-CH₂CH₂O-, CH₃-(O-CH₂CH₂-)₃O-CH₂CH₂O- oder CH₃-(O-CH₂CH₂-)₄O-CH₂CH₂O-.

Alkylthio mit bis zu 25 Kohlenstoffatomen bedeutet einen verzweigten oder unverzweigten Rest wie beispielsweise Methylthio, Ethylthio, Propylthio, Isopropylthio, n-Butylthio, Isobutylthio, Pentylthio, Isopentylthio, Hexylthio, Heptylthio, Octylthio, Decylthio, Tetradecylthio, Hexadecylthio oder Octadecylthio. Bevorzugt ist Alkylthio mit 1 bis 12, insbesondere 1 bis 8, z.B. 1 bis 6 Kohlenstoffatomen.

Alkylamino mit bis zu 4 Kohlenstoffatomen bedeutet einen verzweigten oder unverzweigten Rest wie beispielsweise Methylamino, Ethylamino, Propylamino, Isopropylamino, n-Butylamino, Isobutylamino oder tert-Butylamino.

Di-(C₁-C₄-alkyl)amino bedeutet auch, dass die beiden Reste unabhängig voneinander verzweigt oder unverzweigt sind wie beispielsweise Dimethylamino, Methylethylamino, Diethylamino, Methyl-n-propylamino, Methylisopropylamino, Methyl-n-butylamino, Methylisobutylamino, Ethylisopropylamino, Ethyl-n-butylamino, Ethylisobutylamino, Ethyl-tert-butylamino, Diethylamino, Diisopropylamino, Isopropyl-n-butylamino, Isopropylisobutylamino, Di-n-butylamino oder Di-isobutylamino.

Alkanoylamino mit bis zu 25 Kohlenstoffatomen bedeutet einen verzweigten oder unverzweigten Rest wie beispielsweise Formylamino, Acetylamino, Propionylamino, Butanoylamino, Pentanoylamino, Hexanoylamino, Heptanoylamino, Octanoylamino, Nonanoylamino, Decanoylamino, Undecanoylamino, Dodecanoylamino, Tridecanoylamino, Tetradecanoylamino, Pentadecanoylamino, Hexadecanoylamino, Heptadecanoylamino, Octadecanoylamino, Eicosanoylamino oder Docosanoylamino. Bevorzugt ist Alkanoylamino mit 2 bis 18, insbesondere 2 bis 12, z.B. 2 bis 6 Kohlenstoffatomen.

C₁-C₁₈-Alkylen bedeutet einen verzweigten oder unverzweigten Rest wie beispielsweise Methylen, Ethylen, Propylen, Trimethylen, Tetramethylen, Pentamethylen, Hexamethylen, Heptamethylen, Octamethylen, Decamethylen, Dodecamethylen oder Octadecamethylen. Bevorzugt ist C₁-C₁₂-Alkylen, insbesondere C₁-C₈-Alkylen.

Durch C₁-C₄-Alkyl substituierter C₅-C₁₂-Cycloalkylenring, der vorzugsweise 1 bis 3, insbesondere 1 oder 2 verzweigte oder unverzweigte Alkylgruppen-Reste enthält, bedeutet beispielsweise Cyclopentylen, Methylcyclopentylen, Dimethylcyclopentylen, Cyclohexylen, Methylcyclohexylen, Dimethylcyclohexylen, Trimethylcyclohexylen, tert-Butylcyclohexylen, Cycloheptylen, Cyclooctylen oder Cyclodecylen. Bevorzugt ist Cyclohexylen und tert-Butylcyclohexylen.

Durch Sauerstoff, Schwefel oder 〉N-R₁₄ unterbrochenes C₂-C₁₈-Alkylen bedeutet beispielsweise -CH₂-O-CH₂-, -CH₂-S-CH₂-, -CH₂-NH-CH₂-, -CH₂-N(CH₃)-CH₂-, -CH₂-O-CH₂CH₂-O-CH₂-, -CH₂-(O-CH₂CH₂-)₂O-CH₂-, -CH₂-(O-CH₂CH₂-)₃O-CH₂-, -CH₂-(O-CH₂CH₂-)₄O-CH₂- oder -CH₂CH₂-S-CH₂CH₂-.

C₂-C₁₈-Alkenylen bedeutet beispielsweise Vinylen, Methylvinylen, Octenylethylen oder Dodecenylethylen. Bevorzugt ist C₂-C₈-Alkenylen.

Alkyliden mit 2 bis 20 Kohlenstoffatomen bedeutet beispielsweise Ethyliden, Propyliden, Butyliden, Pentyliden, 4-Methylpentyliden, Heptyliden, Nonyliden, Tridecyliden, Nonadecyliden, 1-Methylethyliden, 1-Ethylpropyliden oder 1-Ethylpentyliden. Bevorzugt ist C₂-C₈-Alkyliden.

Phenylalkyliden mit 7 bis 20 Kohlenstoffatomen bedeutet beispielsweise Benzyliden, 2-Phenylethyliden oder 1-Phenyl-2-hexyliden. Bevorzugt ist C₇-C₉-Phenylalkyliden.

C₅-C₈-Cycloalkylen bedeutet eine gesättigte Kohlenwasserstoffgruppe mit zwei freien Valenzen und mindestens einer Ringeinheit und ist beispielsweise Cyclopentylen, Cyclohexylen, Cycloheptylen oder Cyclooctylen. Bevorzugt ist Cyclohexylen.

C₇-C₈-Bicycloalkylen bedeutet beispielsweise Bicycloheptylen oder Bicyclooctylen.

Unsubstituiertes oder durch C₁-C₄-Alkyl substituiertes Phenylen oder Naphthylen bedeutet beispielsweise 1,2-, 1,3-, 1,4-Phenylen, 1,2-, 1,3-, 1,4-, 1,6-, 1,7-, 2,6- oder 2,7-Naphthylen. 1,4-Phenylen ist bevorzugt.

Durch C₁-C₄-Alkyl substituierter C₅-C₈-Cycloalkylidenring, der vorzugsweise 1 bis 3, insbesondere 1 oder 2 verzweigte oder unverzweigte Alkylgruppen-Reste enthält, bedeutet beispielsweise Cyclopentyliden, Methylcyclopentyliden, Dimethylcyclopentyliden, Cyclohexyliden, Methylcyclohexyliden, Dimethylcyclohexyliden, Trimethylcyclohexyliden, tert-Butylcyclohexyliden, Cycloheptyliden oder Cyclooctyliden. Bevorzugt ist Cyclohexyliden und tert-Butylcyclohexyliden.

Ein ein-, zwei- oder drei-wertiges Metallkation ist vorzugsweise ein Alkalimetall-, Erdalkalimetall- oder Aluminium-Kation, beispielsweise Na⁺, K⁺, Mg⁺⁺, Ca⁺⁺ oder Al⁺⁺⁺.

Von Interesse sind Pulverlackzusammensetzungen enthaltend als Komponente (b) mindestens eine Verbindung der Formel I, worin, wenn n 1 ist, R₁ unsubstituiertes oder in para-Stellung mit C₁-C₁₈-Alkylthio, Di(C₁-C₄-alkyl)amino, C₂-C₈-Alkanoyloxy oder -CH₂CH₂OR₂₃ substituiertes Phenyl; mono- bis penta-substituiertes Alkylphenyl mit total zusammen maximal 18 Kohlenstoffatomen in den 1 bis 5 Alkylsubstituenten; unsubstituiertes oder mit C₁-C₄-Alkyl, C₁-C₄-Alkoxy, C₁-C₄-Alkylthio, Hydroxy oder Amino substituiertes Naphthyl, Biphenyl, Terphenyl, Phenanthryl, Anthryl, Fluorenyl, Carbazolyl, Thienyl, Pyrrolyl, Phenothiazinyl oder 5,6,7,8-Tetrahydronaphthyl darstellt, und R₂₃ C₂-C₁₈-Alkanoyl bedeutet.

Bevorzugt sind Pulverlackzusammensetzungen enthaltend als Komponente (b) mindestens eine Verbindung der Formel worin, wenn n 2 ist,
R₁-R₁₂-X-R₁₃- darstellt,
R₁₂ und R₁₃ Phenylen bedeuten,
X Sauerstoff oder -NR₃₁- darstellt, und
R₃₁ C₁-C₄-Alkyl bedeutet.

Bevorzugt sind auch Pulverlackzusammensetzungen enthaltend als Komponente (b) mindestens eine Verbindung der Formel I, worin, wenn n 1 ist,
R₁ unsubstituiertes oder mit C₁-C₄-Alkyl, C₁-C₄-Alkoxy, C₁-C₄-Alkylthio, Hydroxy, Halogen, Amino, C₁-C₄-Alkylamino oder Di(C₁-C₄-alkyl)amino substituiertes Naphthyl, Phenanthryl, Thienyl, Dibenzofuryl, Carbazolyl, Fluorenyl oder einen Rest der Formel II 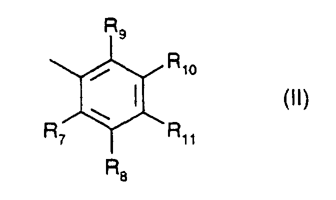 bedeutet,
R₇, R₈, R₉, R₁₀ und R₁₁ unabhängig voneinander Wasserstoff, Chlor, Brom, Hydroxy, C₁-C₁₈-Alkyl, durch Sauerstoff oder Schwefel unterbrochenes C₂-C₁₈-Alkyl; C₁-C₁₈-Alkoxy, durch Sauerstoff oder Schwefel unterbrochenes C₂-C₁₈-Alkoxy; C₁-C₁₈-Alkylthio, C₃-C₁₂-Alkenyloxy, C₃-C₁₂-Alkinyloxy, C₇-C₉-Phenylalkyl, C₇-C₉-Phenylalkoxy, unsubstituiertes oder durch C₁-C₄-Alkyl substituiertes Phenyl; Phenoxy, Cyclohexyl, C₅-C₈-Cycloalkoxy, C₁-C₄-Alkylamino, Di-(C₁-C₄-alkyl)amino, C₁-C₁₂-Alkanoyl, durch Sauerstoff oder Schwefel unterbrochenes C₃-C₁₂-Alkanoyl; C₁-C₁₂-Alkanoyloxy, durch Sauerstoff oder Schwefel unterbrochenes C₃-C₁₂-Alkanoyloxy; C₁-C₁₂-Alkanoylamino, C₃-C₁₂-Alkenoyl, C₃-C₁₂-Alkenoyloxy, Cyclohexylcarbonyl, Cyclohexylcarbonyloxy, Benzoyl oder durch C₁-C₄-Alkyl substituiertes Benzoyl; Benzoyloxy oder durch C₁-C₄-Alkyl substituiertes Benzoyloxy; 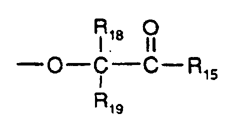 oder 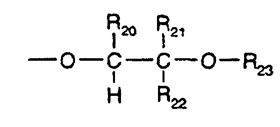 darstellen, oder ferner in Formel II die Reste R₇ und R₈ oder die Reste R₈ und R₁₁ zusammen mit den Kohlenstoffatomen, an die sie gebunden sind, einen Benzoring bilden,
R₁₅ Hydroxy, C₁-C₁₂-Alkoxy oder 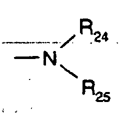 bedeutet,
R₁₈ und R₁₉ unabhängig voneinander Wasserstoff oder C₁-C₄-Alkyl darstellen,
R₂₀ Wasserstoff ist,
R₂₁ Wasserstoff, Phenyl, C₁-C₁₈-Alkyl, durch Sauerstoff oder Schwefel unterbrochenes C₂-C₁₈-Alkyl; C₇-C₉-Phenylalkyl, durch Sauerstoff oder Schwefel unterbrochenes unsubstituiertes oder am Phenylrest durch 1 bis 3 C₁-C₄-Alkyl substituiertes C₇-C₁₈-Phenylalkyl bedeutet, oder ferner die Reste R₂₀ und R₂₁ zusammen mit den Kohlenstoffatomen, an die sie gebunden sind, einen unsubstituierten oder durch 1 bis 3 C₁-C₄-Alkyl substituierten Cyclohexylenring bilden,
R₂₂ Wasserstoff oder C₁-C₄-Alkyl darstellt,
R₂₃ Wasserstoff, C₁-C₁₈-Alkanoyl, C₃-C₁₈-Alkenoyl, durch Sauerstoff oder Schwefel unterbrochenes C₃-C₁₂-Alkanoyl; durch eine Di(C₁-C₆-alkyl)phosphonatgruppe substituiertes C₂-C₁₂-Alkanoyl; C₆-C₉-Cycloalkylcarbonyl, Benzoyl, 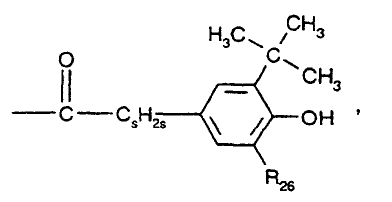 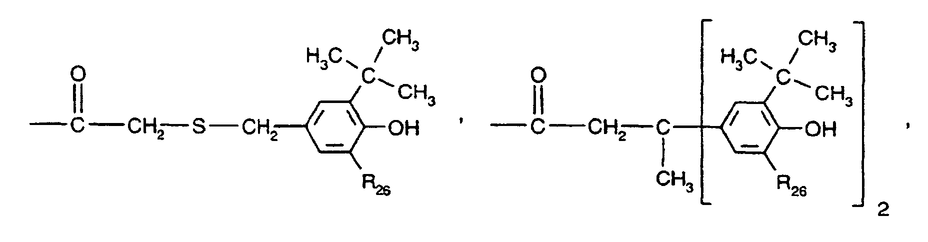 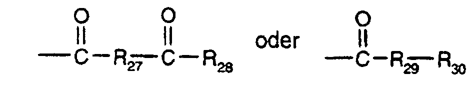 bedeutet,
R₂₄ und R₂₅ unabhängig voneinander Wasserstoff oder C₁-C₁₂-Alkyl darstellen,
R₂₆ Wasserstoff oder C₁-C₄-Alkyl bedeutet,
R₂₇ C₁-C₁₂-Alkylen, C₂-C₈-Alkenylen, C₂-C₈-Alkyliden, C₇-C₁₂-Phenylalkyliden, C₅-C₈-Cycloalkylen oder Phenylen darstellt,
R₂₈ Hydroxy, C₁-C₁₂-Alkoxy oder 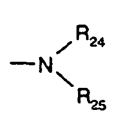 bedeutet,
R₂₉ Sauerstoff oder -NH- darstellt,
R₃₀ C₁-C₁₈-Alkyl oder Phenyl ist, und
s 1 oder 2 bedeutet.

Ebenfalls bevorzugt sind Pulverlackzusammensetzungen enthaltend als Komponente (b) mindestens eine Verbindung der Formel I, worin, wenn n 1 ist,
R₁ Phenanthryl, Thienyl, Dibenzofuryl, unsubstituiertes oder mit C₁-C₄-Alkyl substituiertes Carbazolyl; oder Fluorenyl darstellt; oder R₁ einen Rest der Formel II 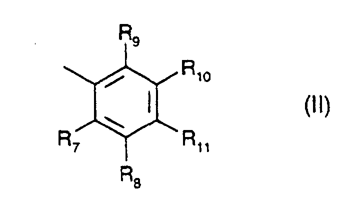 bedeutet,
R₇, R₈, R₉, R₁₀ und R₁₁ unabhängig voneinander Wasserstoff, Chlor, Hydroxy, C₁-C₁₈-Alkyl, C₁-C₁₈-Alkoxy, C₁-C₁₈-Alkylthio, C₃-C₄-Alkenyloxy, C₃-C₄-Alkinyloxy, Phenyl, Benzoyl, Benzoyloxy oder 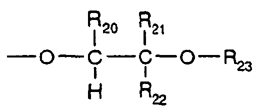 darstellen,
R₂₀ Wasserstoff bedeutet,
R₂₁ Wasserstoff, Phenyl oder C₁-C₁₈-Alkyl darstellt, oder ferner die Reste R₂₀ und R₂₁ zusammen mit den Kohlenstoffatomen, an die sie gebunden sind, einen unsubstituierten oder durch 1 bis 3 C₁-C₄-Alkyl substituierten Cyclohexylenring bilden,
R₂₂ Wasserstoff oder C₁-C₄-Alkyl bedeutet, und
R₂₃ Wasserstoff, C₁-C₁₂-Alkanoyl oder Benzoyl darstellt.

Besonders bevorzugt sind Pulverlackzusammensetzungen enthaltend als Komponente (b) mindestens eine Verbindung der Formel I, worin, wenn n 1 ist,
R₇, R₈, R₉, R₁₀ und R₁₁ unabhängig voneinander Wasserstoff, C₁-C₁₂-Alkyl, C₁-C₄-Alkylthio oder Phenyl bedeuten.

Von besonderem Interesse sind Pulverlackzusammensetzungen enthaltend als Komponente (b) mindestens eine Verbindung der Formel I, worin
R₂, R₃, R₄ und R₅ unabhängig voneinander Wasserstoff, Chlor, C₁-C₁₈-Alkyl, Benzyl, Phenyl, C₅-C₈-Cycloalkyl, C₁-C₁₈-Alkoxy, C₁-C₁₈-Alkylthio, C₁-C₁₈-Alkanoyloxy, C₁-C₁₈-Alkanoylamino, C₃-C₁₈-Alkenoyloxy oder Benzoyloxy darstellen; oder ferner die Reste R₂ und R₃ oder die Reste R₃ und R₄ oder die Reste R₄ und R₅ zusammen mit den Kohlenstoffatomen, an die sie gebunden sind, einen Benzoring bilden, R₄ zusätzlich -(CH₂)ₚ-COR₁₅ oder -(CH₂)_{q}OH darstellt, oder wenn R₃, R₅ und R₆ Wasserstoff sind, R₄ zusätzlich einen Rest der Formel III bedeutet.
R₁₅ Hydroxy, C₁-C₁₂-Alkoxy oder 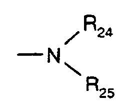 darstellt,
R₁₆ und R₁₇ Methylgruppen sind oder zusammen mit dem C-Atom, an das sie gebunden sind, einen unsubstituierten oder durch 1 bis 3 C₁-C₄-Alkyl substituierten C₅-C₈-Cycloalkylidenring bilden,
R₂₄ und R₂₅ unabhängig voneinander Wasserstoff oder C₁-C₁₂-Alkyl bedeuten,
p 1 oder 2 ist, und
q 2, 3, 4, 5 oder 6 darstellt.

Auch von besonderem Interesse sind Pulverlackzusammensetzungen enthaltend als Komponente (b) mindestens eine Verbindung der Formel I, worin mindestens zwei der Reste R₂, R₃, R₄ und R₅ Wasserstoff sind.

Speziell von besonderem Interesse sind Pulverlackzusammensetzungen enthaltend als Komponente (b) mindestens eine Verbindung der Formel I, worin R₃ und R₅ Wasserstoff sind.

Ganz speziell von besonderem Interesse sind Pulverlackzusammensetzungen enthaltend als Komponente (b) mindestens eine Verbindung der Formel I, worin
R₂ C₁-C₄-Alkyl bedeutet,
R₃ Wasserstoff ist,
R₄ C₁-C₄-Alkyl darstellt, oder wenn R₆ Wasserstoff ist, R₄ zusätzlich einen Rest der Formel III bedeutet,
R₅ Wasserstoff ist, und
R₁₆ und R₁₇ zusammen mit dem C-Atom, an das sie gebunden sind, einen Cyclohexylidenring bilden.

Die folgenden Verbindungen sind Beispiele vom Typ der Benzofuran-2-one, die sich als Komponente (b) in der erfindungsgemässen Pulverlackzusammensetzung sich besonders gut eignen: 3-[4-(2-Acetoxyethoxy)phenyl]-5,7-di-tert-butyl-benzofuran-2-on; 5,7-Di-tert-butyl-3-[4-(2-stearoyloxyethoxy)phenyl]-benzofuran-2-on; 3,3'-Bis[5,7-di-tert-butyl-3-(4-[2-hydroxyethoxy]phenyl)-benzofuran-2-on]; 5,7-Di-tert-butyl-3-(4-ethoxyphenyl)benzofuran-2-on; 3-(4-Acetoxy-3,5-dimethylphenyl)-5,7-di-tert-butyl-benzofuran-2-on; 3-(3,5-Dimethyl-4-pivaloyloxy-phenyl)-5,7-di-tert-butyl-benzofuran-2-on; 5,7-Di-tert-butyl-3-phenyl-benzofuran-2-on; 5,7-Di-tert-butyl-3-(3,4-dimethylphenyl)-benzofuran-2-on; 5,7-Di-tert-butyl-3-(2,3-dimethylphenyl)-benzofuran-2-on; 5,7-Di-tert-butyl-3-(2,3,4,5,6-pentamethyl)-benzofuran-2-on; und die Verbindung der Formel Vc

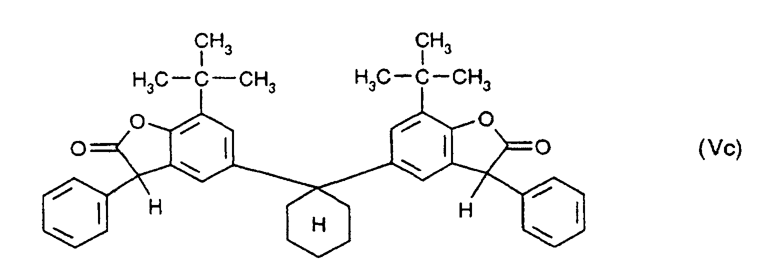

Speziell von besonderem Interesse sind auch Pulverlackzusammensetzungen enthaltend al Komponente (b) mindestens eine Verbindung der Formel V 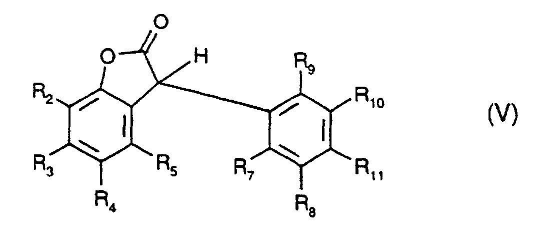 worin
R₂ Wasserstoff oder C₁-C₆-Alkyl darstellt,
R₃ Wasserstoff bedeutet,
R₄ Wasserstoff, C₁-C₆-Alkyl oder einen Rest der Formel IIIa 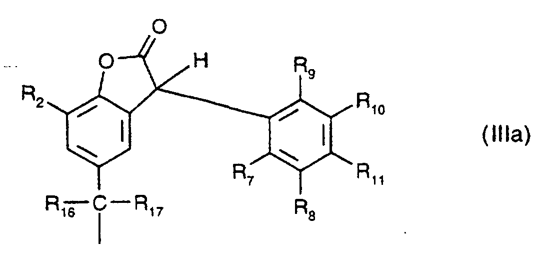 darstellt,
R₅ Wasserstoff bedeutet,
R₇, R₈, R₉ und R₁₀ unabhängig voneinander Wasserstoff, C₁-C₄-Alkyl oder C₁-C₄-Alkoxy darstellen,
R₁₁ Wasserstoff, C₁-C₄-Alkyl oder C₁-C₄-Alkoxy, C₂-C₈-Alkanoyloxy oder 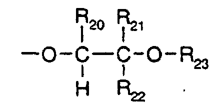 bedeutet, mit der Bedingung, dass mindestens zwei der Reste R₇, R₈,
R₉, R₁₀ oder R₁₁ Wasserstoff sind;
R₁₆ und R₁₇ zusammen mit dem C-Atom, an das sie gebunden sind, einen unsubstituierten oder durch 1 bis 3 C₁-C₄-Alkyl substituierten Cyclohexylidenring bilden,
R₂₀, R₂₁ und R₂₂ Wasserstoff darstellen, und
R₂₃ C₂-C₁₈-Alkanoyl bedeutet.

Ganz besonders bevorzugt sind Pulverlackzusammensetzungen enthaltend als Komponente (b) mindestens eine Verbindung der Formel V 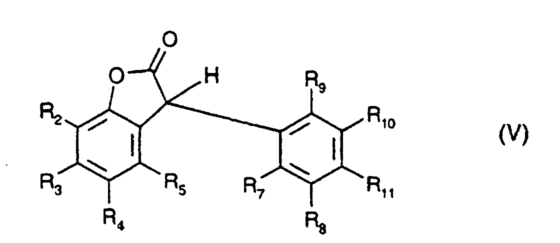 R₂ tert-Butyl darstellt,
R₃ Wasserstoff bedeutet,
R₄ tert-Butyl oder einen Rest der Formel IIIa 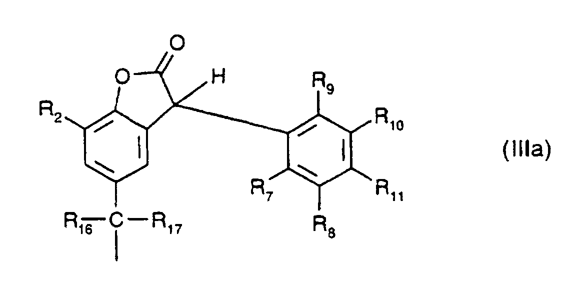 darstellt,
R₅ Wasserstoff bedeutet,
R₇, R₈, R₉ und R₁₀ unabhängig voneinander Wasserstoff, C₁-C₄-Alkyl oder C₁-C₄-Alkoxy darstellen,
R₁₁ Wasserstoff, C₁-C₄-Alkyl oder C₁-C₄-Alkoxy, C₂-C₈-Alkanoyloxy oder 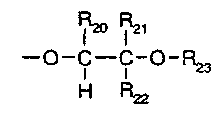 bedeutet, mit der Bedingung, dass mindestens zwei der Reste R₇, R₈,
R₉, R₁₀ oder R₁₁ Wasserstoff sind;
R₁₆ und R₁₇ zusammen mit dem C-Atom, an das sie gebunden sind, einen Cyclohexylidenring bilden,
R₂₀, R₂₁ und R₂₂ Wasserstoff darstellen, und
R₂₃ C₂-C₁₈-Alkanoyl bedeutet.

Die Verbindungen vom Typ der Benzofuran-2-one als Komponente (b) in der erfindungsgemässen Pulverlackzusammensetzung sind in der Literatur bekannt und deren Herstellung beispielsweise in den folgenden U.S. Patentschriften beschrieben: U.S. 4,325,863; U.S. 4,388,244; U.S. 5,175,312; U.S. 5,252,643; U.S. 5,216,052; U.S. 5,369,159; U.S. 5,488,117; U.S. 5,356,966; U.S. 5,367,008; U.S. 5,428,162; U.S. 5,428,177 oder U.S. 5,516,920.

Von Interesse sind Pulverlackzusammensetzungen, worin die Pulverlackzusammensetzung eine thermisch, inbesondere in Gasöfen, härtbare Pulverlackzusammensetzung darstellt.

Unter dem Begriff Gasöfen werden Öfen verstanden, die durch Verbrennung von Kohlenwasserstoffen wie beispielsweise Methan, Propan, Butan, Steinkohlengas, Kohlenmonoxid, Wasserstoff oder Ölen gespiesen werden. Bei der Verbrennung der Gase bzw. Oxidation der Gase mit Luft entstehen mit dem Stickstoff, der in der Luft vorhanden ist, die für die Härtung der Pulverlackzusammensetzung unerwünschten Stickoxide. Die Stickoxid-Konzentration in diesen Gasöfen beträgt 1 bis 500 ppm, insbesondere 5 bis 100 ppm, z.B. 10 bis 80 ppm.

Die vorliegende Erfindung betrifft deshalb auch bei der Härtung mit aus Verbrennungsgasen stammenden Stickoxiden in Kontakt stehende Pulverlackzusammensetzungen enthaltend die Komponenten (a) und (b).

Unter dem Begriff "Pulverlackzusammensetzungen" bzw. "Pulverlacke" wird die Definition wie sie in "Ullmann's Encyclopedia of Industrial Chemistry, 5th, Completely Revised Edition, Vol. A 18", Seiten 438 bis 444 (1991) unter dem Kapitel 3.4 beschrieben ist, verstanden. Unter Pulverlacken werden thermoplastische oder einbrennbare, vemetzbare Polymere, die in Pulverform auf vorwiegend metallische Substrate aufgetragen werden, verstanden. Die Art und Weise, wie das Pulver mit dem zu beschichtenden Werkstück in Kontakt gebracht wird, kennzeichnet die verschiedenen Auftragsverfahren, wie beispielsweise elektrostatisches Pulverspritzen, elektrostatisches Wirbelsintern, Schüttsintern, Wirbelsintern, Rotationssintern oder Zentrifugalsintern.

Bevorzugte organische filmbildende Bindemittel für die erfindungsgemässen Pulverlackzusammensetzungen sind Einbrennsysteme auf Basis von beispielsweise Epoxidharzen, Polyester-Hydroxyalkylamiden, Polyester-Glykolurilen, Epoxid-Polyesterharzen, Polyester-Triglycidylisocyanuraten, hydroxyfuntionellen Polyester-blockierten Polyisocyanaten, hydroxyfunktionellen Polyester-Uretdionen, Acrylatharzen mit Härter oder Mischungen solcher Harze.

Von Interesse sind auch filmbildende Bindemittel mit thermoplastischen Eigenschaften wie beispielsweise Polyethylen, Polypropylen, Polyamide, Polyvinylchlorid, Polyvinylidendichlorid oder Polyvinylidendifluorid.

Polyester sind in der Regel hydroxy- oder carboxyfunktionell und werden üblicherweise durch Kondensation von Diolen und Dicarbonsäuren hergestellt. Durch Zugabe von Polyolen und/oder Polysäuren werden verzweigte Polyester erhalten, welche beim Einbrennen in Gegenwart von Vernetzern dann Netzwerkstrukturen ergeben, die der Beschichtung die erwünschten physikalischen Eigenschaften wie Kratzfestigkeit, Schlag- und Biegefestigkeit verleihen. Anstelle von multifunktionellen Säuren können auch Anhydride oder Säurechloride wie z.B. Maleinsäureanhydrid, Itakonsäureanhydrid, Phthalsäureanhydrid, Terephthalsäureanhydrid, Hexahydroterephthalsäureanhydrid, Trimellithsäureanhydrid, Pyromellithsäuredianhydrid, Bernsteinsäureanhydrid usw. verwendet werden. Es können auch einfache Ester wie z.B. Dimethylterephthalat verwendet werden, wobei die Polymerisation durch Transesterifizierung unter Abspaltung des flüchtigen Alkohols abläuft. Praktikabel ist ebenfalls eine Herstellung durch eine Kombination von Transesterifizierung und Kondensation. Weiter können Polyester durch Polykondensation von Hydroxycarbonsäuren wie z.B. 12-Hydroxystearinsäure und Hydroxypivalinsäure oder den entsprechenden Lactonen wie z.B. ε-Caprolacton hergestellt werden. Beispiele für Dicarbonsäuren und Polysäuren sind u.a. Terephthalsäure, Isophthalsäure, Adipinsäure, Azelainsäure, Sebazinsäure, 1,12-Dodecandisäure, Pyromellithsäure, 3,6-Dichlorophthalsäure, Bernsteinsäure, 1,3-Cyclohexandicarbonsäure und 1,4-Cyclohexandicarbonsäure. Beispiele für Diole und Polyole sind u.a. Ethylenglykol, Propylenglykol, Glycerin, Hexantriol, Hexan-2,5-diol, Hexan-1,6-diol, Pentaerythritol, Sorbitol, Neopentylglykol, Trimethylolethan, Trimethylolpropan, Tris-1,4-Cyclohexandimethanol, Trimethylpentandiol, 2,2-Diethyl-1,3-propandiol, 2-Methyl-2-butyl-1,3-propandiol, Esterdiol 204 (Ester der Hydroxypivalinsäure und Neopentylglykol), hydriertes Bisphenol A, Bisphenol A, Hydroxypivalinsäure, Hydroxypivalatester, 2-Butyl-2-ethyl-1,3-propandiol, 1,4-Butandiol, 2-Buten-1,4-diol, 2-Butyn-1,4-diol oder 2-Methyl-1,3-propandiol.

Als Vernetzungsmittel für carboxyfunktionelle Polyester sind Epoxyverbindungen wie z.B Novolac®-Epoxyharze, Diglycidyläther von Bisphenol A, hydriertes Bisphenol A und Bisphenol A modifiziert durch Reaktion mit z.B. aliphatischen Dicarbonsäuren geeignet. Ebenso geeignet sind reaktive Epoxyverbindungen wie Triglycidyltriazolidin-3,5-dion, die Glycidylester von Polysäuren wie z.B. Diglycidylterephthalat und Diglycidylhexahydroterephthalat, Hydantoinepoxide (U.S. 4,402,983) und ganz besonderes Triglycidylisocyanurat, epoxidierte ungesättigte Fettsäureester (wie beispielsweise Uranox® von der Firma DSM) und Araldit®PT 910 (Ciba Spezialitätenchemie AG). Weitere Vernetzungsmittel für carboxyfunktionelle Polyester sind β-Hydroxyalkylamide (U.S. 4,076,917), wie z.B. das mehrheitlich tetrafunktionelle β-Hydroxyalkylamid-Derivat der Adipinsäure (Primid® XL552 von Rohm & Haas). Auch haben sich Derivate von Melamin, Benzoguanimin und Glykoluril, welche mit niedrigmolekularen Alkoholen alkyliert sind, bewährt. Beispiele sind Tetramethylmethoxyglykoluril (Powderlink® 1174 von American Cyanamid). Ferner sind auch Bis- und Trisoxazolidine wie z.B. 1,4-Bisoxazolidinobenzol als Vernetzungsmittel bekannt.

Jüngeren Datums sind carboxyfunktionelle Polyester, welche chemisch gebundene Epoxygruppen enthalten und demzufolge mit sich selbst vernetzen können (Molhoek et al., 22er Fatipec Congress, 15.-19.5.95, Budapest, Vol.1, 119-132).

In allen Systemen, in denen eine Epoxygruppe oder ein Glycidylrest mit einer Carboxylgruppe oder einem Anhydrid in einer Vernetzungsreaktion reagiert, können Katalysatoren eingesetzt werden. Beispiele sind Amine oder Metallverbindungen wie z.B. Aluminiumacetylacetonat oder Zinnoctoat.

Als Vernetzungsmittel für hydroxyfunktionelle Polyester sind die Polyisocyanatvernetzer von besonderer Bedeutung. Um aufgrund der hohen Reaktivität von Isocyanaten eine vorzeitige Vernetzung zu verhindern und um einen guten Verlauf des aufgeschmolzenen Pulvers zu erhalten, werden die Polyisocyanate blockiert (intern als ein Uretdion oder als ein Addukt mit einem Blockierungsmittel). Als Blockierungsmittel werden am häufigsten ε-Caprolactam, Methylethylketoxim oder Butanonoxim eingesetzt. Weitere geeignete Blockierungsmittel für Isocyanate sind in den Veröffentlichungen von G.B. Guise, G.N. Freeland und G.C. Smith, J. Applied Polymer Science, 23, 353 (1979) und von M.Bock und H.-U. Maier-Westhues in "Progress in Product Development for Powder Coating Technology, XIX th Int. Conf. on Organic Coatings, Science and Technol., Athens, 12-16 July", 1993 beschrieben. Beispiele für gegebenenfalls blockierte Polyisocyanate sind u.a. 2-Methylpentan-1,5-diisocyanat, 2-Ethylbutan-1,4-diisocyanat, 3(4)-Isocyanatomethyl-1-methylcyclohexylisocyanat, 3-Isocyanatomethyl-3,5,5-trimethylcyclohexandiisocyanat, Tris(isocyanatomethyl)benzol, 4,4'-Diisocyanatodicyclohexylmethan, 1,4-Bis(isocyanatomethyl)cyclohexan, m-Tetramethylxyloldiisocyanat, p-Tetramethylxyloldiisocyanat und besonders Isophorondiisocyanat. Zur Deblockierung wird meistens ein metallischer Katalysator, wie z.B. Zinnoctoat, Dibutylzinnoxyd oder Dibutylzinndilaurat zu der Polyisocyanat-Formulierung gegeben.

Als weitere Vernetzungsmittel für hydroxyfunktionelle Polyester sind Anhydride wie z.B. Trimellithsäureanhydrid und seine Reaktionsprodukte mit Diolen und Diaminen geeignet. Weitere Beispiele solcher Vernetzungsmittel sind von T.A. Misev in "Powder Coatings: Chemistry and Technology", Verlag J.Wiley & Sons, Chichester auf Seiten 123 u. 124 beschrieben.

Polyacrylate, die gewöhnlich Hydroxy-,Carboxy- oder Glycidylfunktionalität aufweisen, werden auch als Bindemittel für Pulverlacke eingesetzt. Diese werden nach den üblichen Methoden hauptsächlich aus Monomeren wie z.B. Styrol und linearen oder verzweigten C₁-C₈-Alkylestern von Acrylsäure oder Methacrylsäure hergestellt. Auch andere ethylenisch ungesättigte Verbindungen wie z.B. Divinylbenzol, Acrylamid, Methacrylamid, Butoxymethylacrylamid, Acrylonitril, Butadien usw. können zugegeben und copolymerisiert werden. Hydroxyfunktionalität wird durch die Copolymerisation von hydroxyfunktionellen Monomeren wie z.B. Hydroxyethylacrylat, Hydroxyethylmethacrylat, Hydroxypropylacrylat, Hydroxypropylmethacrylat gewährleistet. Für Carboxyfunktionalität werden ethylenisch ungesättigte Säuren und Anhydride wie z.B. Acrylsäure, Methacrylsäure, Itakonsäure, Crotonsäure, Maleinsäureanhydrid, Itakonsäureanhydrid, Acrylsäureanhydrid oder Methacrylsäureanhydrid verwendet (US-A-3 836 604). Glycidylfunktionalität wird wie in EP-A-0 256 369 und US-A-3 876 578 gelehrt, durch die Copolymerisation von Monomeren wie Glycidylacrylat und Glycidylmethacrylat gegeben. Als Vernetzungsmittel für Polyacrylate mit Hydroxy- oder Carboxyfunktionalität können im Prinzip die gleichen Verbindungen, wie bereits für die Polyester mit Hydroxyoder Carboxyfunktionalität beschrieben, verwendet werden. Weitere geeignete Vernetzungsmittel sind die Epoxyverbindungen des US-A-0 045 040. Geignete Vernetzungsmittel für Polyacrylate mit Glycidylfunktionalität sind Dicarbonsäuren wie z.B. Sebazinsäure, 1,12-Dodecandicarbonsäure und Anhydride wie beispielsweise Bis-trimellithsäureanhydrid und die in US-A-3 880 946 beschriebenen Verbindungen. Ferner sind auch selbstvemetzende Polyacrylate aus DE-A-3 310 545 bekannt.

Epoxidharze für Pulverlacke sind meistens entweder Novolac®-Epoxidharze oder besonders solche auf Basis aromatische Polyole, insbesondere auf Basis von Bisphenolen wie Bisphenol A. Ferner sind modifizierte Bisphenolepoxidharze aus JP-A-58 187 464 (1982) bekannt. Die Epoxidharze werden in Kombination mit Vernetzern aus den Klassen der festen aliphatischen Amine, festen aromatischen Amine, Aminaddukte, Phenolharze, Polysäuren und den bereits beschriebenen carboxyfunktionellen Polyestern angewandt. Ganz besonders als Härter zu erwähnen sind die Dicyandiamide, die häufig mit einem Katalysator wie beispielsweise Lewissäuren, Borontrifluorid-Amin-Komplexen, Metallkomplexen, tertiären oder quaternären Aminen und Imidazolin Derivaten wie 2-Methylimidazolin eingesetztwerden.

Die Komponente (b) wird zweckmässig in einer Menge von 0,001 bis 10 Gew.-%, beispielsweise 0,01 bis 5 Gew.-%, vorzugsweise 0,025 bis 3 Gew.-%, insbesondere 0,05 bis 3 Gew.-%, bezogen auf das Gewicht der Komponente (a) verwendet.

Zusätzlich zu den Komponente (a) und (b) können die erfindungsgemässen Pulverlackzusammensetzungen noch weitere Additive enthalten.

Bevorzugte erfindungsgemässe Pulverlackzusammensetzungen enthalten als weitere Additive eine oder mehrere Komponenten aus der Gruppe der Pigmente, Farbstoffe, Füllstoffe, Verlaufshilfsmittel, Entgasungsmittel, Ladungssteuermittel, optische Aufheller, Haftungsverbesserer, Antioxidantien, Lichtstabilisatoren, Härtungskatalysatoren, Photoinitiatoren, Benetzungshilfsmittel oder Korrosionsschutzmittel.

Korrosionsschutzmittel sind beispielsweise Korrosionsschutz-Pigmente, wie phosphat- oder borathaltige Pigmente oder Metalloxid-Pigmente, oder andere organische oder anorganische Korrosionsinhibitoren, z.B. Salze der Nitroisophthalsäure, Phosphorester, technische Amine, substituierte Benztriazole oder (2-Benzothiazolylthio)bernsteinsäure (Irgacor®252, Ciba Spezialitätenchemie AG).

Beispiele für Entgasungsmittel sind Fettsäureamide wie in EP-A-0 471 409 beschrieben, ε-Caprolactam, Stearinsäure, Methyl- und Dimethylisophthalat (EP-A-284 996) und ganz besonders Benzoin.

Beispiele für Verlaufshilfsmittel sind epoxidierte Fettsäuren, Abietylalkohol, Polylaurylmethacrylat, Polylaurylacrylat, Polydimethylsiloxan-polyalkylenoxid Blockcopolymere oder insbesondere Polymere und Copolymere mit niedrigem Molekulargewicht von C₁-C₈-Alkylacrylatestern oder Alkylmethacrylatestern.

Haftungsverbesserer basieren z.B. auf modifizierten Silanen, Titanaten oder Zirkonaten.

Die Pigmente sind beispielsweise Titandioxid, Eisenoxid, Russ, Aluminiumbronze, Phthalocyaninblau, Aminoanthrachinon, Bariumsulfat oder Lithopon.

Geeignete Benetzungshilfsmittel sind beispielsweise fluorierte Netzmittel wie beispielsweise Fluorad®FC 430 (Firma 3M, USA).

Geeignete Photoinitiatoren für UV-härtende Pulverlacke sind auf Basis der Benzophenone, Phenylglyoxalate, Bis- sowie Mono-Acylphosphinoxiden, α-Hydroxyketonen oder Benzyldimethylketalen aufgebaut. Geeignet sind auch Gemische von Photoinitiatoren.

Ein besonders geeigneter optischer Aufheller ist Uvitex®OB (Ciba Spezialitätenchemie AG).

Beispiele für Füllstoffe sind Talk, Aluminiumoxid, Aluminiumsilikat, Aluminiumphosphat, Baryt, Glimmer, Siliciumdioxid, Calcium- oder Magnesiumcarbonat, Magnesiumoxid, Zinkoxid, Zinkcarbonat, Zinkphosphat oder Gemische davon.

Zusätzlich zu der Komponente (b) können die erfindungsgemässen Pulverlackzusammensetzungen weitere Costabilisatoren (Additive) enthalten, wie beispielsweise die folgenden:

### 1. Antioxidantien

1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Di-nonyl-4-methylphenol, 2,4-Dimethyl-6-(1'-methyl-undec-1'-yl)-phenol, 2,4-Dimethyl-6-(1'-methylheptadec-1'-yl)-phenol, 2,4-Dimethyl-6-(1'-methyl-tridec-1'-yl)-phenol und Mischungen davon.
1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.
1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.
1.4. Tocopherole, z.B. α-Tocopherol, β-Tocopherol, γ-Tocopherol, δ-Tocopherol und Mischungen davon (Vitamin E).
1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.
1.6. Alkyliden-Bisphenole, z.B. 2,2'-Methylen-bis(6-tert-butyl-4-methylphenol), 2,2'-Methylenbis(6-tert-butyl-4-ethylphenol), 2,2'-Methylen-bis[4-methyl-6-(α-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-tert-butylphenol), 2,2'-Ethyliden-bis(6-tert-butyl-4-isobutylphenol), 2,2'-Methylen-bis[6-(α-methylbenzyl)-4-nonylphenol], 2,2'-Methylen-bis[6-(α,α-dimethylbenzyl)-4-nonylphenol], 4,4'-Methylen-bis(2,6-ditert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1-Bis(5-tert-butyl-4-hydroxy-2-methyl-phenyl)-3-n-dodecylmercaptobutan, Ethylenglycol-bis[3,3-bis(3'-tert-butyl-4'-hydroxyphenyl)-butyrat], Bis(3-tert-butyl-4-hydroxy-5-methyl-phenyl)-dicyclopentadien, Bis[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methylphenyl)-4-n-dodecylmercapto-butan, 1,1,5,5-Tetra-(5-tertbutyl-4-hydroxy-2-methylphenyl)-pentan.
1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy-3,5-ditert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, Isooctyl-3,5-di-tert-butyl-4-hydroxybenzyl-mercaptoacetat.
1.8. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.
1.9. Hydroxybenzyl-Aromaten, z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris-(3,5-di-tert-butyl-4-hydroxybenzyl)-phenol.
1.10. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tertbutyl-4-hydroxyphenoxy)-1,2,3-triazin, 1,3,5-Tris(3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris(3,5-di-tertbutyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.
1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.
1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
1.13. Ester der β-(3,5-Di-tert-butyl-4-hydroxyphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-oclan.
1.14. Ester der β-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.15. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.17. Amide der β-(3,5-Di-tert-butyl-4-hydroxyphenyl)-propionsäure, wie z.B. N,N'-Bis(3,5-ditert-butyl-4-hydroxyphenylpropionyl)-hexamethylendiamid, N,N'-Bis(3,5-di-tert-butyl-4-hydroxyphenylpropionyl)-trimethylendiamid, N,N'-Bis(3,5-di-tert-butyl-4-hydroxyphenylpropionyl)-hydrazid, N,N'-Bis[2-(3-[3,5-di-tert-butyl-4-hydroxyphenyl]-propionyloxy)ethyl]oxamid (Naugard®XL-1 der Firma Uniroyal).
1.18. Ascorbinsäure (Vitamin C).
1.19. Aminische Antioxidantien, wie z.B. N,N'-Di-isopropyl-p-phenylendiamin, N,N'-Di-secbutyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(2-naphthyl)-p-phenyl-lendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-pphenylendiamin, 4-(p-Toluol-sulfonamido)-diphenylamin, N,N'-Dimethyl-N,N'-di-sec-butyl-pphenylendiamin, Diphenylamin, N-Allyldiphenylamin, 4-Isopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylamino-phenol, 4-Dodecanoylamino-phenol, 4-Octadecanoylaminophenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diaminodiphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethypiperidin-4-on, 2,2,6,6-Tetramethylpiperidin-4-ol.

### 2. UV-Absorber und Lichtschutzmittel

2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tertbutyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxy-carbonylethyl)phenyl)-benzotriazol, 2-(3'-tert-Butyl-2'-hydroxy-5'-(2-octyloxycarbonylethyl)-phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; 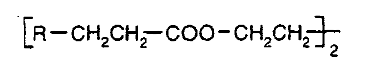 mit R = 3'-tert-Butyl-4'-hydroxy-5'-2H-benzotriazol-2-yl-phenyl; 2-[2'-Hydroxy-3'-(α,α-dimethylbenzyl)-5'-(1,1,3,3-tetramethylbutyl)-phenyl]-benzotriazol; 2-[2'-Hydroxy-3'-(1,1,3,3-tetramethylbutyl)-5'-(α,α-dimethylbenzyl)-phenyl]-benzotriazol.
2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. - butylester, α-Carbomethoxy-p-methoxy-zimtsäure-methylester, N-(β-Carbomethoxy-β-cyanovinyl)-2-methyl-indolin.
2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestem, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
2.6. Sterisch gehinderte Amine, wie z.B. Bis(2,2,6,6-tetramethyl-piperidin-4-yl)-sebacat, Bis-(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, lineare oder cyclische Kondensationsprodukte aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]-decan-2,4-dion, Bis(1-octyloxy-2,2,6,6-tetramethylpiperidyl)-sebacat, Bis(1-octyloxy-2,2,6,6-tetramethylpiperidyl)-succinat, lineare oder cyclische Kondensationsprodukte aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondensationsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro-[4,5]decan und Epichlorhydrin, 1,1-Bis(1,2,2,6,6-pentamethyl-4-piperidyloxycarbonyl)-2-(4-methoxyphenyl)-ethen, N,N'-Bis-formyl-N,N'-bis(2,2,6,6-tetramethyl-4-piperidyl)-hexamethylendiamin, Diester der 4-Methoxy-methylen-malonsäure mit 1,2,2,6,6-Pentamethyl-4-hydroxy-piperidin, Poly[methylpropyl-3-oxy-4-(2,2,6,6-tetramethyl-4-piperidyl)]-siloxan, Reaktionsprodukt aus Maleinsäureanhydrid-α-olefin-copolymer und 2,2,6,6-Tetramethyl-4-aminopiperidin oder 1,2,2,6,6-Pentamethyl-4-aminopiperidin.
2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o-und p-Methoxy- sowie von o- und p-Ethoxy-di-substituierten Oxaniliden.
2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.
3. Metalldesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenylpropionyl)-hydrazin, 3-Salicyloylamino-1,2,4-triazol, Bis(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.
4. Phosphite und Phosphonite, wie z.B. Triphenylphosphit, Diphenylalkylphosphite, Phenyldialkylphosphite, Tris(nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tert-butyl-4-methyl-phenyl)-pentaerythritdiphosphit, Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis(2,4-di-tertbutyl-6-methylphenyl)-methylphosphit, Bis(2,4-di-tert-butyl-6-methylphenyl)-ethylphosphit, 2,2',2"-Nitrilo[triethyl-tris(3,3',5,5'-tetra-tert-butyl-1,1'-biphenyl-2,2'-diyl)-phosphit], 2-Ethylhexyl-(3,3',5,5'-tetra-tert-butyl-1,1'-biphenyl-2,2'-diyl)-phosphit.

Besonders bevorzugt werden die folgenden Phosphite verwendet:

Tris(2,4-di-tert-butylphenyl)-phosphit (Irgafos®168, Ciba-Geigy), Tris(nonylphenyl)-phosphit,

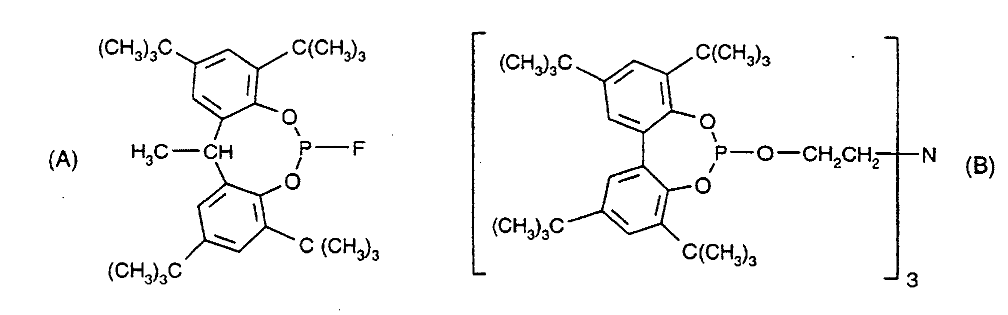

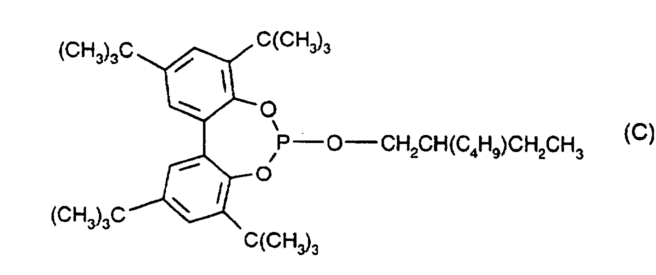

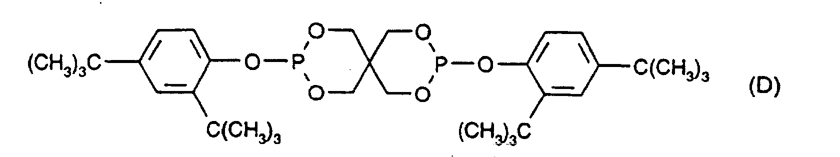

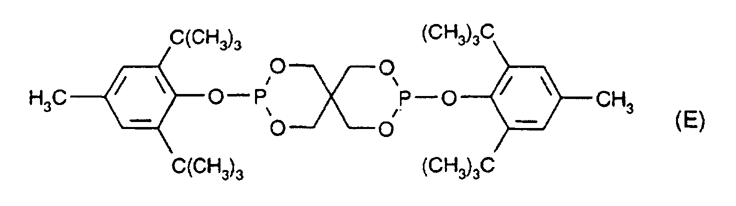

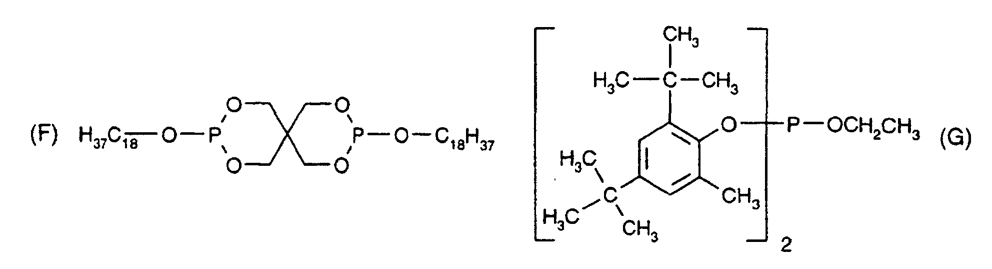

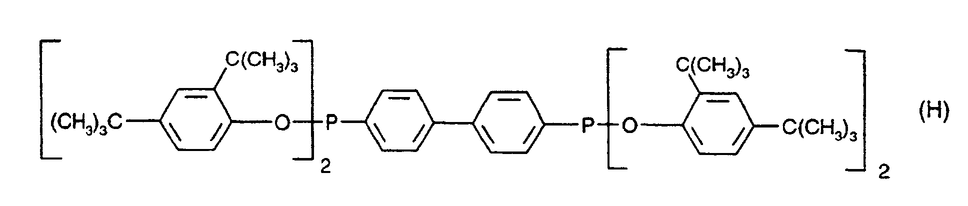

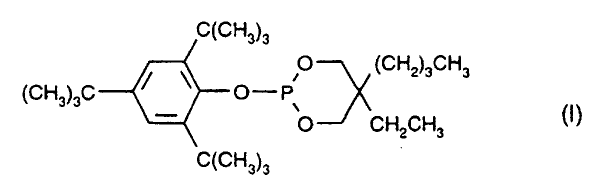

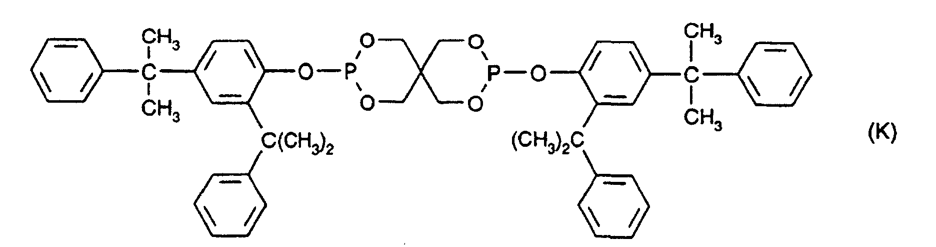

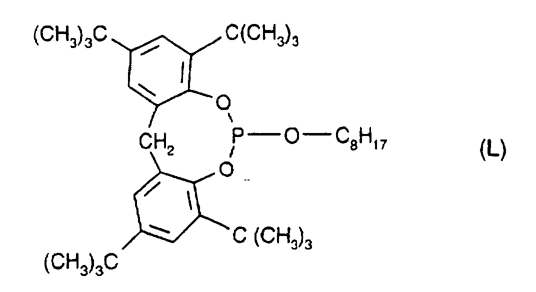

Ganz besonders bevorzugt wird Tris(2,4-di-tert-butylphenyl)-phosphit [Irgafos®168, Ciba Spezialitätenchemie AG], Bis(2,4-di-tert-butyl-6-methylphenyl)-ethyl-phosphit [Irgafos®38, Ciba Spezialitätenchemie AG, Formel (G)], Ultranox®626 [GE Chemicals, Formel (D)], Tetrakis(2,4-di-tert-butylphenyl)-4,4'-biphenylen-diphosphonit [Irgafos®P-EPQ, Ciba Spezialitätenchemie AG, Formel (H)], Ultranox®641 [GE Chemicals, Formel (1)], Doverphos®S9228 [Dover Chemicals, Formel (K)] oder Mark®HP10 [Adeka Argus, Formel (L)].
5. Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.
6. Nitrone wie z.B. N-Benzyl-alpha-phenyl-nitron, N-Ethyl-alpha-methyl-nitron, N-Octyl-alphaheptyl-nitron, N-Lauryl-alpha-undecyl-nitron, N-Tetradecyl-alpha-tridecyl-nitron, N-Hexadecyl-alpha-pentadecyl-nitron, N-Octadecyl-alpha-heptadecyl-nitron, N-Hexadecyl-alphaheptadecyl-nitron, N-Octadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.
7. Thiosynergisten wie z.B. Thiodipropionsäure-di-laurylester oder Thiodipropionsäure-distearylester.
8. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.

Die Costabilisatoren werden beispielsweise in Konzentrationen von 0,01 bis 10 %, vorzugsweise 0,025 bis 3 Gew.-%, insbesondere 0,05 bis 3 Gew.-%, bezogen auf das Gewicht der Komponente (a) verwendet.

Besonders bevorzugte zusätzliche Additive sind phenolische Antioxidantien (Punkt 1 der Liste), sterisch gehinderte Amine (Punkt 2.6 der Liste), Phosphite und Phosphonite (Punkt 4 der Liste) und/oder Thiosynergisten (Punkt 7 der Liste).

Die zusätzlichen Additive aus der Gruppe der Phosphite und Phosphonite haben bevorzugt einen Schmelzpunkt von 40-150°C, insbesondere 60-120°C, z.B. 70-110°C. Diese bevorzugten Schmelzbereiche erleichtern die Mischung mit den Komponenten (a) und (b).

Die genannten zusätzlichen Additive sind bekannte Verbindungen; viele davon sind kommerziell erhältlich.

Bei der Herstellung des organischen filmbildenden Bindemittels [Komponente (a)] durch Polymerisation oder Polykondensation von Monomeren kann die Komponente (b) und die oben aufgeführten zusätzlichen weiteren Additive, den Monomeren vor der Polymerisation bereits zugemischt werden.

Die Pulverlackzusammensetzungen werden nach den üblichen Verfahren, insbesondere elektrostatisches Pulverspritzen, auf das Substrat aufgebracht. Das von der Spritzpistole abgesprühte Pulver wird an einer Hochspannungselektrode elektrostatisch aufgeladen und unter Wirkung der Luftströmung sowie der elektrostatischen Anziehungskraft an das Werkstück gezogen. Der Umgriff der Feldlinien sorgt dafür, dass auch Hinterschneidungen und Rückseiten beschichtet werden. Die aufgebrachten Partikel, die durch Coulombsche Kräfte haften, werden im Gasofen zusammengeschmolzen und ausgehärtet. Die bevorzugten Einbrenntemperaturen liegen zwischen 130 und 230° C je nach der Reaktivität des filmbildenden Bindemittels (Harz/Härter-System).

Bevorzugte Substrate sind metallische Substrate, wie beispielsweise Eisen, Stahl, Kupfer, Zink, Zinn, Magnesium, Silicium, Titan oder Aluminium, sowie deren Legierungen.

Eine bevorzugte Ausführungsform der vorliegenden Erfindung ist die Verwendung der Komponente (b) als Stabilisator zur Verminderung der Verfärbung von thermisch, insbesondere in Gasöfen, härtbaren Pulverlackzusammensetzungen (Einbrennlacken).

Die vorliegende Erfindung betrifft auch ein Verfahren zur Verminderung der Verfärbung von thermisch härtbaren Pulverlackzusammensetzungen, das dadurch gekennzeichnet ist, dass man diesen mindestens eine Komponente (b) einverleibt oder auf diese aufbringt.

Ebenso betrifft die vorliegende Erfindung ein Verfahren zum Härten von Pulverlackzusammensetzungen enthaltend die Komponenten (a) und (b), dadurch gekennzeichnet, dass die Härtung in einem Gasofen durchgeführt wird.

Ein weiterer Gegenstand der Erfindung betrifft auch die nach den obigen Verfahren aufgebrachten und gehärteten Lackfilme.

Die Herstellung einer Pulverlackzusammensetzung mit den erfindungsgemässen Komponenten (a) und (b) kann nach den üblichen Methoden erfolgen. Eine gute Beschreibung der Vorgänge und Maschinen ist in T.A. Misev's Buch: "Powder Coatings: Chemistry and Technology", Verlag J.Wiley & Sons, Chichester im Kapitel 5 zu finden.

In der Regel werden alle Komponenten der Pulverlackzusammensetzung ausgewogen und in einem geeigneten Mischer zusammengemischt. Hierfür werden Taumelmischer, Kegelmischer, Doppelkegelmischer, Horizontalmischer, Blenders sowie Rührwerke wie Planetenmischer verwendet.

Die Formulierung wird zunächst in einem geheizten Extruder, üblicherweise im Bereich von 70 bis 135°C, vorzugsweise 80 bis 120°C, verarbeitet damit eine möglichst homogene, geschmolzene Masse erhalten wird. Geignete Geräte hierfür sind Einzelwellen-Kokneter, Doppelschneckenextruder und Planetenextruder. Die Dosierung erfolgt meistens über einen Schneckenförderer, ein Förderband oder eine Schüttelrinne. Nach dem Extrudieren wird die heisse Masse ausgewalzt und gekühlt, z.B. auf einem Kühlband. Wenn die Masse erstarrt ist, wird sie zerbrochen und anschliessend gemahlen. Hilfsmittel wie z.B. Kieselgel oder Aluminiumoxide können in kleinen Mengen vor oder nach dem Mahlen zugegeben. Geeignete Mahlwerke sind Stiftmühlen, Ultrazentrifugalmühlen, Jetmühlen und ganz besonders Klassifiziermühlen. Im Anschluss wird das Pulver klassifiziert und bevorzugt gesiebt. Nach dem Mahlen können beispielsweise Metalleffekt-Pigmente oder Mica zugegeben werden. Die Partikelgrösse beträgt nach dem Mahlen normalerweise im Bereich von 1 bis 100 µm, mit einem Medianwert von 3 bis 50 µm.

Kürzlich sind auch andere Pulverlackherstellungsverfahren (EP-B-368 851 oder WO-A-92/00342) bekannt geworden, welche sich auch für diese Erfindung anwenden lassen. Dabei wird die bereits vorgemischte Formulierung oder das Extrudat einem geheizten Drehrohr zugegeben und auf einem Drehteller herausgeschleudert. Am Rand des Tellers werden kleine, runde nahezu monodisperse Tropfen gebildet, die an gekühlter Luft erstarren bevor sie zu Boden fallen.

Ein neues Verfahren zur Herstellung von Pulverlackzusammensetzungen besteht darin, dass die Komponenten (a) und (b) in flüssigem Kohlendioxid gemischt werden und anschliessend das Kohlendioxid durch Sprühtrocknung oder Verdampfung entfernt wird (siehe auch US-A-4 414 370 oder US-A-4 529 787). Auch für solche Herstellungsverfahren für Pulverlackzusammensetzungen sind die Stabilisatoren [Komponente (b)] der vorliegenden Erfindung bestens geeignet.

Wenn die Komponente (b) der vorliegenden Erfindung einen tiefen Schmelzpunt besitzt (< 50°C) oder bei Raumtemperatur flüssig ist, können bei der Handhabung Schwierigkeiten auftreten, weil klebrige oder flüssige Produkte nicht einfach in einen Extruder gebracht werden können. Schwierigkeiten können auch auftreten, wenn die Komponente (b) fest ist und einen hohen Schmelzpunkt hat (> 120°C) oder bei der Extrusionstemperatur eine hohe Schmelzviskosität aufweist. Solche Komponenten (b) lassen sich nicht so gut mit der Komponente (a) mischen. In solchen Fällen hat es sich als nützlich erwiesen, die Komponente (b) der vorliegenden Erfindung in der Form eines "Masterbatches" zu verwenden.

Ein "Masterbatch" ist ein Konzentrat einer Komponente (b) in der Komponente (a). Die Komponente (b) kann dabei dispergiert oder bevorzugt gelöst in Komponente (a) vorliegen. Die Menge an Kommonente (b) in einem "Masterbatch" ist nur durch die Loslichkeit in der Komponente (a) oder physikalischen Eigenschaften des "Masterbatches" bestimmt wie beispielsweise die unerwünschte Tendenz zur Klumpenbildung während der Lagerung. Bevorzugte "Masterbatches" enthalten die Komponente (b) in einer Menge von 5 bis 90 %, insbesondere 5 bis 60 %, z.B. 5 bis 40 %, bezogen auf das Gewicht der Komponente (a).

Die "Masterbatches" können bereits während der Herstellung der Komponente (a) erfolgen. So kann beispielsweise bei Polyestern, welche bevorzugt bei Temperaturen von ca. 240°C hergestellt werden, während der Polykondensation die Komponente (b) und eventuell weitere Additive zugegeben werden.

Eine alternative Methode zur Verwendung der Komponente (b) in der erfindungsgemässen Pulverlackzusammensetzung besteht auch darin, dass die Komponente (b) auf einen porösen Feststoff absorbiert wird. Diese Methode ist vorallem dann zweckmässig, wenn die Komponente (b) bei Raumtemperatur flüssig oder zähflüssig ist. Als poröse Feststoffe sind besonders solche geeignet, die einen hohen Oel-Absorptions-Wert und eine kleine Partikelgrösse besitzen wie beispielsweise Aluminiumoxid oder Kieselgel.

Die Applikation der Pulverlacke erfolgt nach den praxisüblichen Methoden. Es können z.B. Koronapistolen, sowie triboelektrische Spritzpistolen verwendet werden. Es kann auch eine triboelektrische Aufladung durch Kontakt mit magnetischen Trägerteilchen, wie beispielsweise in WO-A-96/15199 beschrieben, erzeugt werden. Ferner können geladene Pulverlacke mit Pulverdosierungsanlagen, wie beispielsweise in EP-A-0 678 466 beschrieben, auf Substrate aufgebracht werden. Ferner sind alle Varianten des Wirbelsinterverfahrens mit und ohne elektrostatische Aufladung anwendbar. Für thermoplastische Pulverlacke sind auch Flammspritzverfahren anwendbar.

Aus beispielsweise U.S. 4,268,542 oder WO-A-96/32452 sind Pulverlack-Aufschlemmungen ("slurries") bekannt, worin der Pulverlack mit Hilfe von geeigneten Dispergier- und Netzmittel in Wasser suspendiert wird. Solche Pulverlack-Aufschlämmungen werden mit herkömmlichen Nasslackspritzpistolen gespritzt. Nach Verdunsten des Wassers können die auf das Substrat aufgebrachten Pulverlackschichten wie gewöhnliche Pulverlacke eingebrennt werden. Hierfür sind die erfindungsgemässen Pulverlackzusammensetzungen besonders geeignet.

Das Einbrennen der Pulverlackzusammensetzung kann in elektrischen Öfen oder in Gasöfen erfolgen. Das Einbrennen in Gasöfen kann auch zusätzlich mittels Infrarotheizung oder durch elektrische Heizkörper erfolgen.

Die folgenden Beispiele erläutern die Erfindung weiter. Angaben in Teilen oder Prozenten beziehen sich auf das Gewicht.

### Beispiel 1: Messung der Verfärbung von in Elektro- und Gasöfen gehärteten Pulverlacken auf Basis eines carboxyfunktionellen Polyesters.

Zur Herstellung der Pulverlackzusammensetzung auf Basis eines carboxyfunktionellen Polyesters werden die Komponenten 1 bis 6 (Formulierung ohne Additive) bzw. die Komponenten 1 bis 7 (Formulierung enthaltend die Stabilisatoren) in der angegebenen Reihenfolge eingesetzt (vgl. Tabelle 1).

**Tabelle 1:**

| Komponenten | Beispiele (Mengenangabe in Gramm) | |
|---|---|---|
| | 1a | 1b bis 1i |
| 1. Crylcoat® 360^{a)} | 591 | 591 |
| 2. Araldit® GT 7004^{b)} | 394 | 394 |
| 3. Octadecyltrimethylammoniumbromid^{c)} | 3,6 | 3,6 |
| 4. Resiflow® PV 88^{d)} | 12 | 12 |
| 5. Benzoin^{e)} | 3 | 3 |
| 6. Titandioxid Typ R-KB-5^{f)} | 500 | 500 |
| 7. Stabilisatoren (siehe Tabelle 2) | ― | 6 |
| Total: | 1503,6 | 1509,6 |

| | | |
|---|---|---|
| a) Crylcoat® 360 von der Firma UCB S.A., Drogenbos, Belgien. | | |
| b) Araldit® GT 7004 von der Firma Ciba Spezialitätenchemie AG bedeutet ein Bisphenol-A-diglycidylether. | | |
| c) Octadecyltrimethylammoniumbromid von der Firma Fluka AG, Buchs, Schweiz. | | |
| d) Resiflow® PV 88 von der Firma Worlée Chemie GmbH, Lauenburg, Deutschland. | | |
| e) Benzoin von der Firma Fluka AG. | | |
| f) Titandioxid Typ R-KB-5 von der Firma Bayer AG, Leverkusen, Deutschland. | | |

Die so eingewogenen Komponenten werden unter Verwendung eines Planetenrührers gemischt. Anschliessend wird das Gemisch auf einem Prism Extruder bei 300 Umdrehungen/-Minute und 100°C extrudiert und ausgewalzt. Die Pulverlackmasse wird mit einem Tischkutter grobzerkleinert und in einer Retsch ZM-1 Ultrazentrifugalmühle mit einem 0,75 mm Ringlochsieb und 15000 Umdrehungen/Minute gemahlen. Schliesslich wird das Pulver durch ein 30 µm Sieb auf einer Kreiselsiebmaschine gesiebt.

Die fertige Pulverlackzusammensetzung wird mit einer ESB-Wagner-Corona-Becherpistole mit 60 kV auf Aluminiumbleche elektrostatisch auf eine Schichtdicke von 70 µm gespritzt. Ein Teil der beschichteten Bleche wird in einem elektrischen Ofen während 90 Minuten bei 180°C gehärtet. Der andere Teil der beschichteten Bleche wird in einem Gasofen mit einem NO₂-Anteil von 20 ppm während 45 Minuten bei 180°C gehärtet. Von den Proben wird der Yellowness Index (Yl) nach ASTM D 1925-70 bestimmt. Niedrige YI-Werte bedeuten wenig Verfärbung, hohe Yl-Werte starke Verfärbung der Proben. Je geringer die Verfärbung, desto wirksamer ist der Stabilisator. Die Resultate sind in den Tabellen 2 und 3 zusammengefasst.

**Tabelle 2:**

| Härtung während 90 Minuten im Elektroofen bei 180°C | | |
|---|---|---|
| Beispiele | Stabilisatoren | Yellowness Index nach 90 Minuten |
| | (% bzgl. Komponten 1 bis 5) | (ASTM D 1925-70) |
| Beispiel 1a | ― | 3,1 |
| Beispiel 1b | 0,60 % Irganox® HP-136^{g)} | 2,8 |
| Beispiel 1c | 0,50 % Irgafos® 168^{h)} | 2,8 |
| | 0,10 % Irganox® HP-136^{g)} | |
| Beispiel 1d | 0,15 % Irgafos® 168^{h)} | 2,8 |
| | 0,15 % HALS-Gemischⁱ⁾ | |
| | 0,30 % Irganox® HP-136^{g)} | |
| Beispiel 1 e | 0,15 % Irgafos® 168^{h)} | 2,8 |
| | 0,15 % Irganox® 1010^{j)} | |
| | 0,30 % Irganox® HP-136^{g)} | |

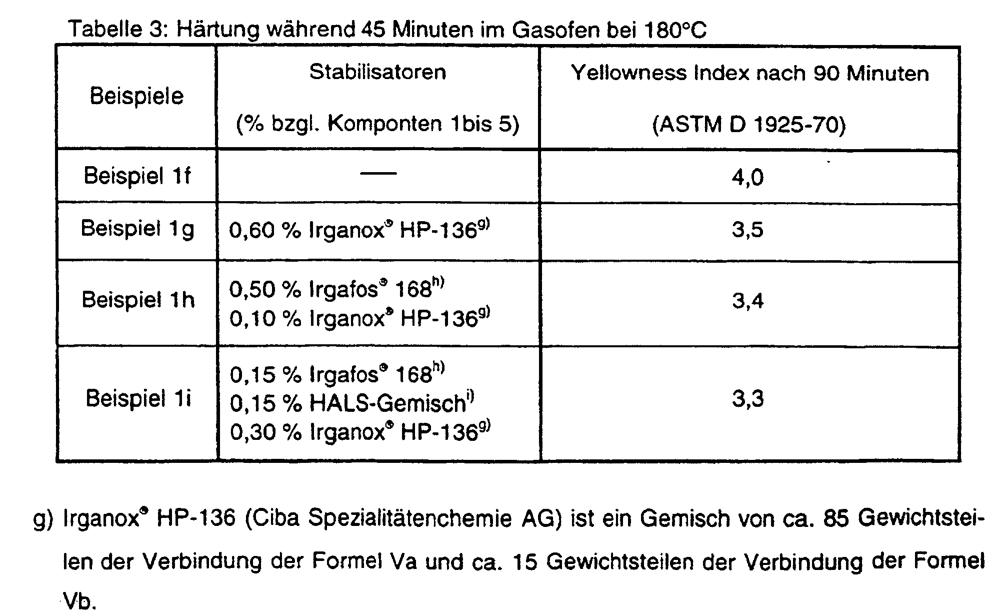

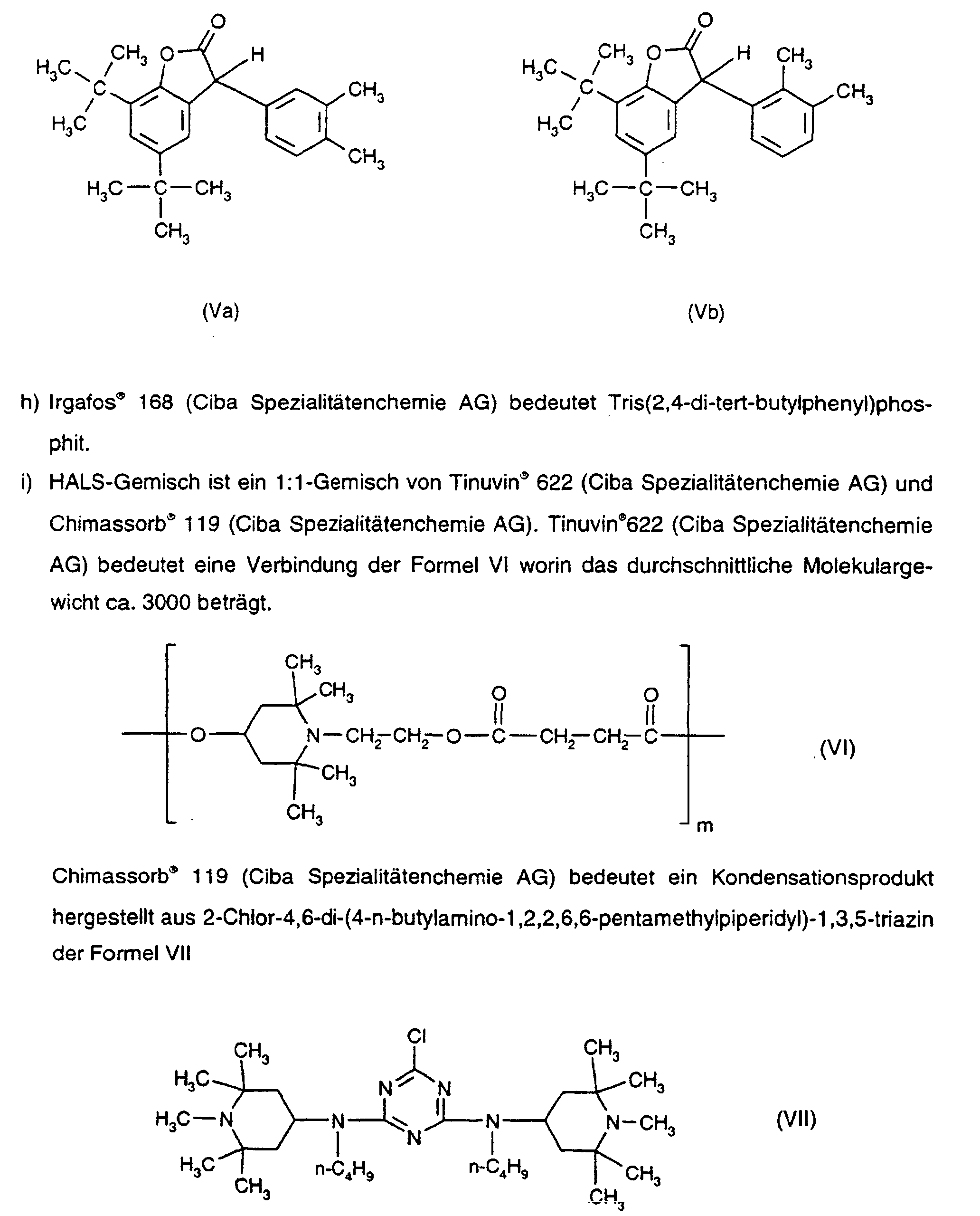

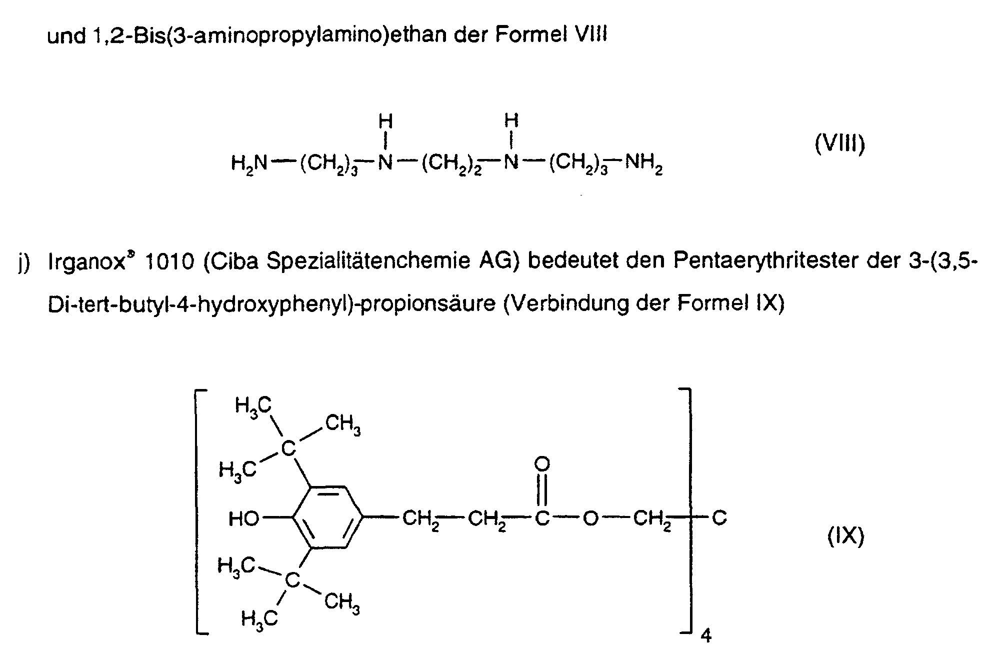

### Beispiel 2: Messung der Verfärbung von im Elektrofen gehärteten Pulverlacken auf Basis eines hydroxyfunktionellen Polyester-Uretdions.

Zur Herstellung der Pulverlackzusammensetzung auf Basis eines hydroxyfunktionellen Polyester-Uretdions werden die Komponenten 1 bis 6 (Formulierung ohne Additive) bzw. die Komponenten 1 bis 7 (Formulierung enthaltend die Stabilisatoren) in der angegebenen Reihenfolge eingesetzt (vgl. Tabelle 4).

**Tabelle 4:**

| Komponenten | Beispiele (Mengenangabe in Gramm) | |
|---|---|---|
| | 2a | 2b bis 2f |
| 1. Aftalat® AN 745^{k)} | 169,2 | 169,2 |
| 2. Vestagon® BF 1540^{l)} | 27,6 | 27,6 |
| 3. Resiflow® PV88^{m)} | 2,0 | 2,0 |
| 4. Benzoinⁿ⁾ | 0,8 | 0,8 |
| 5. Metatin Katalysator 712ES^{o)} | 0,4 | 0,4 |
| 6. Kronos® 2160^{p)} | 100,0 | 100,0 |
| 7. Stabilisatoren (siehe Tabelle 5) | ― | 1,7 |
| Total: | 300,0 | 301,7 |

| | | |
|---|---|---|
| k) Aftalat® AN 745 ist ein hydroxyfunktioneller Polyester der Firma Vianova Resins SpA, Romano D'Ezzelino, Italien. | | |
| l) Vestagon® BF 1540 Araldit® ist ein Uretdion Härter der Firma Hüls AG, Marl, Deutschland. | | |
| m) Resiflow® PV88 ist ein Polyacrylat-Verlaufshilfsmittel der Firma Worlée Chemie GmbH, Lauenburg, Deutschland. | | |
| n) Benzoin von der Firma Fluka AG. | | |
| o) Metatin Katalysator 712ES ist Di-n-butylzinndilaurat von der Firma Acimo, Buchs, Schweiz. | | |
| p) Kronos® 2160 ist Titandioxid der Firma Titan-GmbH, Leverkusen, Deutschland. | | |

Die so eingewogenen Komponenten werden unter Verwendung eines Planetenrührers gemischt. Anschliessend wird das Gemisch auf einem Prism Extruder bei 300 Umdrehungen/-Minute und 130°C extrudiert und ausgewalzt. Die Pulverlackmasse wird mit einem Tischkutter grobzerkleinert und in einer Retsch ZM-1 Ultrazentrifugalmühle mit einem 0,75 mm Ringlochsieb und 15000 Umdrehungen/Minute gemahlen. Schliesslich wird das Pulver durch ein 30 µm Sieb auf einer Kreiselsiebmaschine gesiebt.

Die fertige Pulverlackzusammensetzung wird mit einer ESB-Wagner-Corona-Becherpistole mit 60 kV auf Aluminiumbleche elektrostatisch auf eine Schichtdicke von 90 µm gespritzt. Die beschichteten Bleche werden in einem elektrischen Ofen während 15 Minuten bei 185°C gehärtet. Von den Proben wird dann die ΔE-Farbe gemäss DIN 6174 und 5033, Teil 9 gegen einen Weiss-Standard bestimmt. Grosse ΔE-Werte bedeuten eine grössere Vergilbung. Je geringer die Verfärbung, desto wirksamer ist der Stabilisator Die Resultate sind in der Tabelle 5 zusammengefasst.

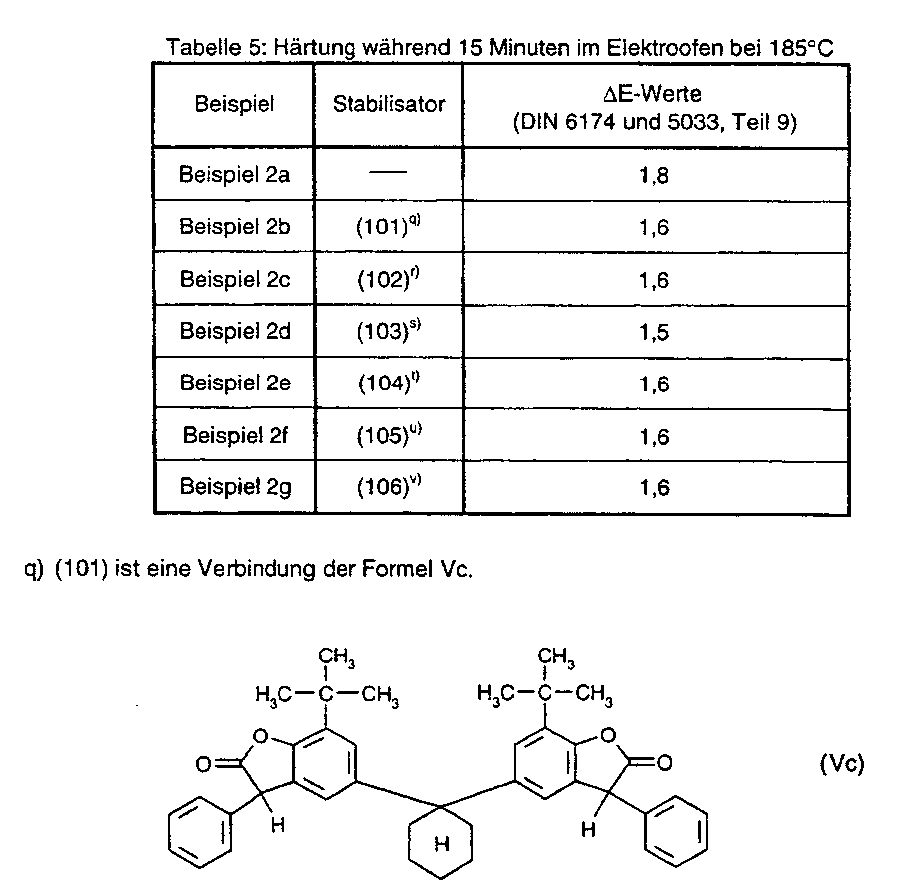

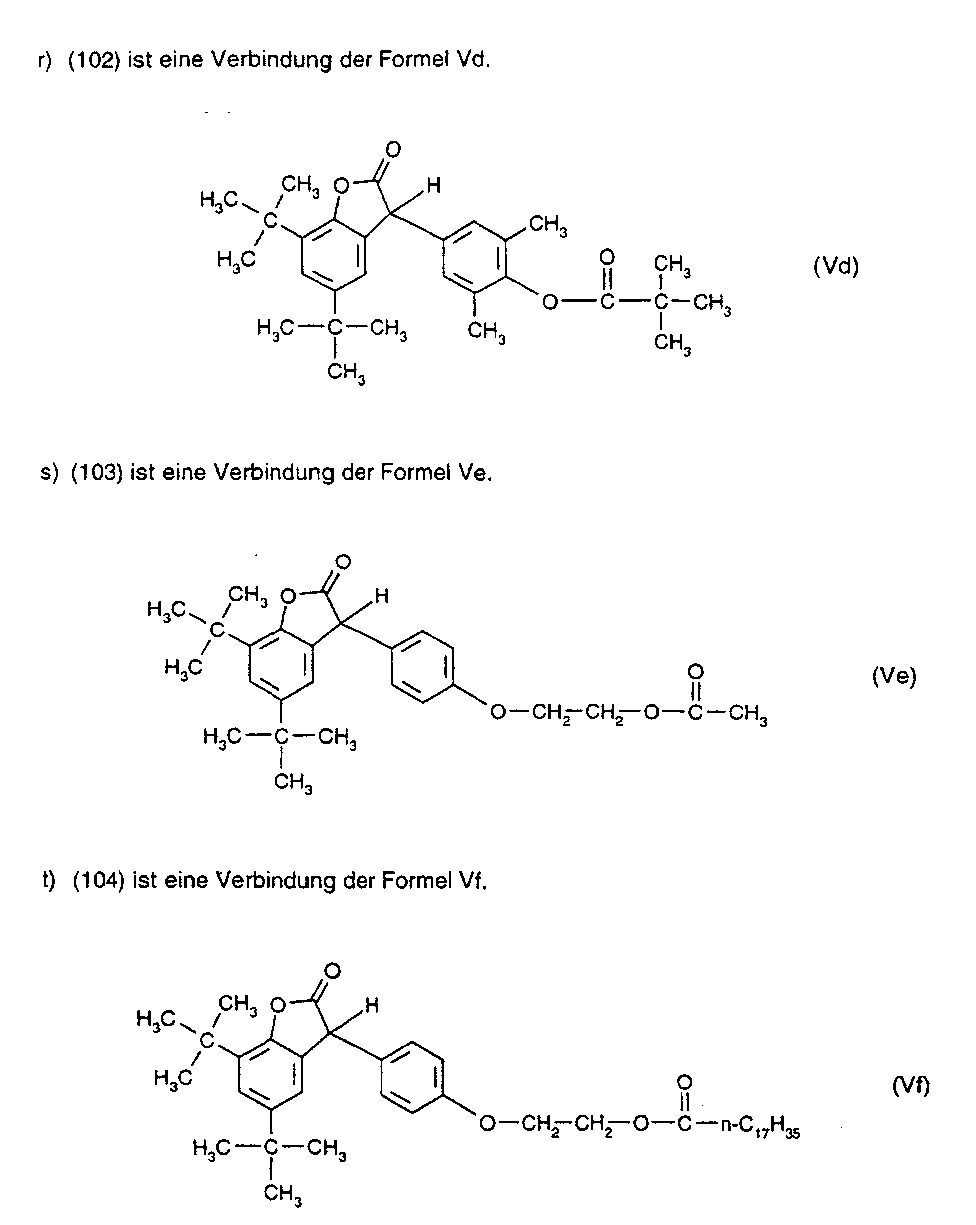

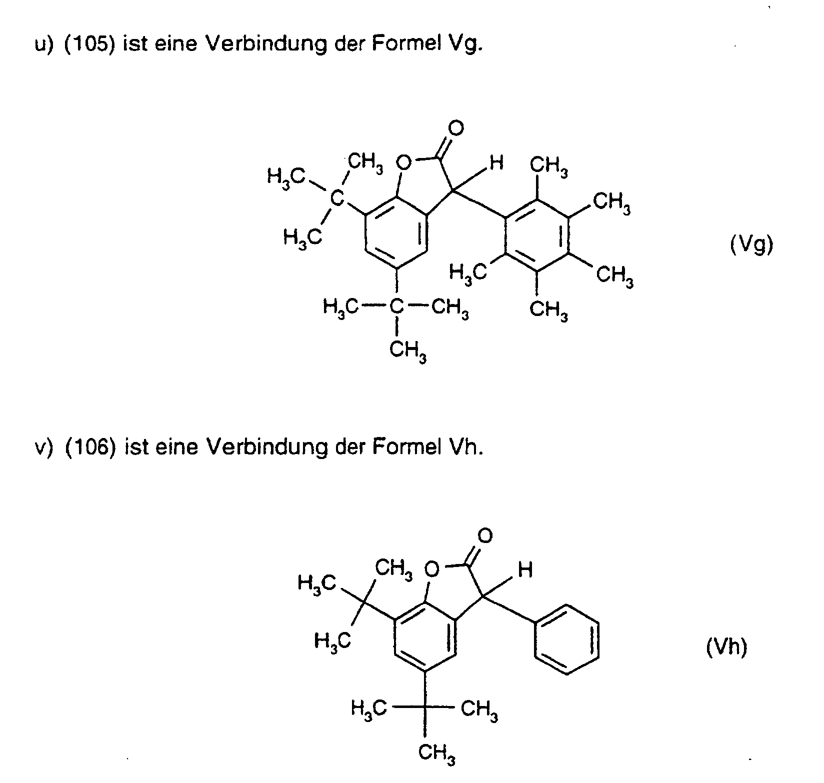

## Patentansprüche

1. Pulverlackzusammensetzung enthaltend
a) ein organisches filmbildendes Bindemittel, und
b) als Stabilisator mindestens eine Verbindung vom Typ der Benzofuran-2-one.

2. Pulverlackzusammensetzung gemäss Anspruch 1, worin die Komponente (b) eine Verbindung der Formel I 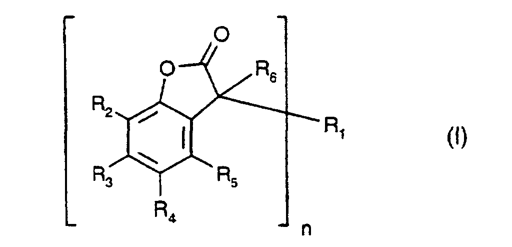 ist, worin, wenn n 1 ist,
R₁ unsubstituiertes oder mit C₁-C₄-Alkyl, C₁-C₄-Alkoxy, C₁-C₄-Alkylthio, Hydroxy, Halogen, Amino, C₁-C₄-Alkylamino, Phenylamino oder Di(C₁-C₄-alkyl)amino substituiertes Naphthyl, Phenanthryl, Anthryl, 5,6,7,8-Tetrahydro-2-naphthyl, 5,6,7,8-Tetrahydro-1-naphthyl, Thienyl, Benzo[b]thienyl, Naphtho[2,3-b]thienyl, Thianthrenyl, Dibenzofuryl, Chromenyl, Xanthenyl, Phenoxathiinyl, Pyrrolyl, Imidazolyl, Pyrazolyl, Pyrazinyl, Pyrimidinyl, Pyridazinyl, Indolizinyl, Isoindolyl, Indolyl, Indazolyl, Purinyl, Chinolizinyl, Isochinolyl, Chinolyl, Phtalazinyl, Naphthyridinyl, Chinoxalinyl, Chinazolinyl, Cinnolinyl, Pteridinyl, Carbazolyl, β-Carbolinyl, Phenanthridinyl, Acridinyl, Perimidinyl, Phenanthrolinyl, Phenazinyl, Isothiazolyl, Phenothiazinyl, Isoxazolyl, Furazanyl, Biphenyl, Terphenyl, Fluorenyl oder Phenoxazinyl darstellt, oder R₁ einen Rest der Formel II 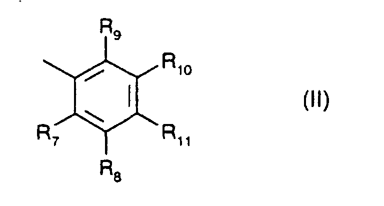 bedeutet, und
wenn n 2 ist,
R₁ unsubstituiertes oder mit C₁-C₄-Alkyl oder Hydroxy substituiertes Phenylen oder Naphthylen; oder -R₁₂-X-R₁₃- darstellt,
R₂, R₃, R₄ und R₅ unabhängig voneinander Wasserstoff, Chlor, Hydroxy, C₁-C₂₅-Alkyl, C₇-C₉-Phenylalkyl, unsubstituiertes oder durch C₁-C₄-Alkyl substituiertes Phenyl; unsubstituiertes oder durch C₁-C₄-Alkyl substituiertes C₅-C₈-Cycloalkyl; C₁-C₁₈-Alkoxy, C₁-C₁₈-Alkylthio, C₁-C₄-Alkylamino, Di-(C₁-C₄-alkyl)amino, C₁-C₂₅-Alkanoyloxy, C₁-C₂₅-Alkanoylamino, C₃-C₂₅-Alkenoyloxy, durch Sauerstoff, Schwefel oder 〉N―R₁₄ unterbrochenes C₃-C₂₅-Alkanoyloxy; C₆-C₉-Cycloalkylcarbonyloxy, Benzoyloxy oder durch C₁-C₁₂-Alkyl substituiertes Benzoyloxy darstellen; oder ferner die Reste R₂ und R₃ oder die Reste R₃ und R₄ oder die Reste R₄ und R₅ zusammen mit den Kohlenstoffatomen, an die sie gebunden sind, einen Benzoring bilden, R₄ zusätzlich -(CH₂)ₚ-COR₁₅ oder -(CH₂)_{q}OH darstellt, oder wenn R₃, R₅ und R₆ Wasserstoff sind, R₄ zusätzlich einen Rest der Formel III 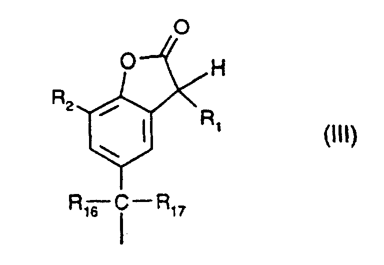 bedeutet, worin R₁ wie oben für n = 1 angegeben definiert ist,
R₆ Wasserstoff oder einen Rest der Formel IV 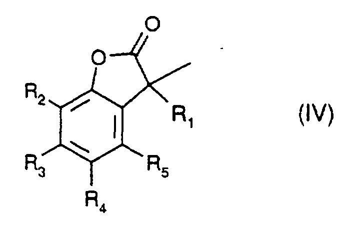 darstellt, wobei R₄ nicht einen Rest der Formel III bedeutet und R₁ wie oben für n = 1 angegeben definiert ist,
R₇, R₈, R₉, R₁₀ und R₁₁ unabhängig voneinander Wasserstoff, Halogen, Hydroxy, C₁-C₂₅-Alkyl, durch Sauerstoff, Schwefel oder 〉N―R₁₄ unterbrochenes C₂-C₂₅-Alkyl; C₁-C₂₅-Alkoxy, durch Sauerstoff, Schwefel oder 〉N―R₁₄ unterbrochenes C₂-C₂₅-Alkoxy; C₁-C₂₅-Alkylthio, C₃-C₂₅-Alkenyl, C₃-C₂₅-Alkenyloxy, C₃-C₂₅-Alkinyl, C₃-C₂₅-Alkinyloxy, C₇-C₉-Phenylalkyl, C₇-C₉-Phenylalkoxy, unsubstituiertes oder durch C₁-C₄-Alkyl substituiertes Phenyl; unsubstituiertes oder durch C₁-C₄-Alkyl substituiertes Phenoxy; unsubstituiertes oder durch C₁-C₄-Alkyl substituiertes C₅-C₈-Cycloalkyl; unsubstituiertes oder durch C₁-C₄-Alkyl substituiertes C₅-C₈-Cycloalkoxy; C₁-C₄-Alkylamino, Di-(C₁-C₄-alkyl)amino, C₁-C₂₅-Alkanoyl, durch Sauerstoff, Schwefel oder 〉N―R₁₄ unterbrochenes C₃-C₂₅-Alkanoyl; C₁-C₂₅-Alkanoyloxy, durch Sauerstoff, Schwefel oder 〉N―R₁₄ unterbrochenes C₃-C₂₅-Alkanoyloxy; C₁-C₂₅-Alkanoylamino, C₃-C₂₅-Alkenoyl, durch Sauerstoff, Schwefel oder 〉N―R₁₄ unterbrochenes C₃-C₂₅-Alkenoyl; C₃-C₂₅-Alkenoyloxy, durch Sauerstoff, Schwefel oder 〉N―R₁₄ unterbrochenes C₃-C₂₅-Alkenoyloxy; C₆-C₉-Cycloalkylcarbonyl, C₆-C₉-Cycloalkylcarbonyloxy, Benzoyl oder durch C₁-C₁₂-Alkyl substituiertes Benzoyl; Benzoyloxy oder durch C₁-C₁₂-Alkyl substituiertes Benzoyloxy; 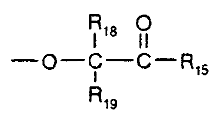 oder 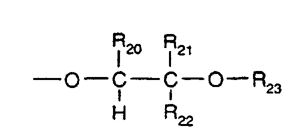 darstellen, oder ferner in Formel II die Reste R₇ und R₈ oder die Reste R₈ und R₁₁ zusammen mit den Kohlenstoffatomen, an die sie gebunden sind, einen Benzoring bilden,
R₁₂ und R₁₃ unabhängig voneinander unsubstituiertes oder durch C₁-C₄-Alkyl substituiertes Phenylen oder Naphthylen darstellen,
R₁₄ Wasserstoff oder C₁-C₈-Alkyl ist,
R₁₅ Hydroxy, 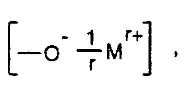 C₁-C₁₈-Alkoxy oder 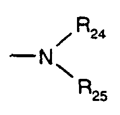 bedeutet,
R₁₆ und R₁₇ unabhängig voneinander Wasserstoff, CF₃, C₁-C₁₂-Alkyl oder Phenyl darstellen, oder R₁₆ und R₁₇ zusammen mit dem C-Atom, an das sie gebunden sind, einen unsubstituierten oder durch 1 bis 3 C₁-C₄-Alkyl substituierten C₅-C₈-Cycloalkylidenring bilden;
R₁₈ und R₁₉ unabhängig voneinander Wasserstoff, C₁-C₄-Alkyl oder Phenyl darstellen,
R₂₀ Wasserstoff oder C₁-C₄-Alkyl ist,
R₂₁ Wasserstoff, unsubstituiertes oder durch C₁-C₄-Alkyl substituiertes Phenyl; C₁-C₂₅-Alkyl, durch Sauerstoff, Schwefel oder 〉N―R₁₄ unterbrochenes C₂-C₂₅-Alkyl; unsubstituiertes oder am Phenylrest durch 1 bis 3 C₁-C₄-Alkyl substituiertes C₇-C₉-Phenylalkyl; durch Sauerstoff, Schwefel oder 〉N―R₁₄ unterbrochenes unsubstituiertes oder am Phenylrest durch 1 bis 3 C₁-C₄-Alkyl substituiertes C₇-C₂₅-Phenylalkyl bedeutet, oder ferner die Reste R₂₀ und R₂₁ zusammen mit den Kohlenstoffatomen, an die sie gebunden sind, einen unsubstituierten oder durch 1 bis 3 C₁-C₄-Alkyl substituierten C₅-C₁₂-Cycloalkylenring bilden;
R₂₂ Wasserstoff oder C₁-C₄-Alkyl darstellt,
R₂₃ Wasserstoff, C₁-C₂₅-Alkanoyl, C₃-C₂₅-Alkenoyl, durch Sauerstoff, Schwefel oder 〉N―R₁₄ unterbrochenes C₃-C₂₅-Alkanoyl; durch eine Di(C₁-C₆-alkyl)phosphonatgruppe substituiertes C₂-C₂₅-Alkanoyl; C₆-C₉-Cycloalkylcarbonyl, Thenoyl, Furoyl, Benzoyl oder durch C₁-C₁₂-Alkyl substituiertes Benzoyl; 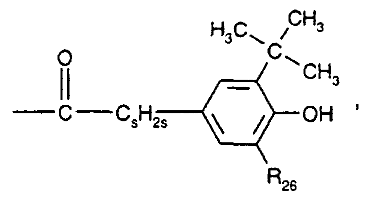 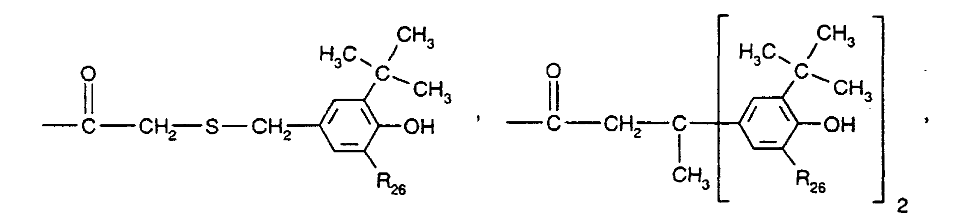 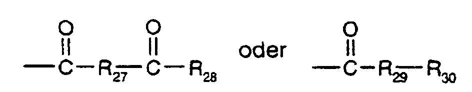 bedeutet,
R₂₄ und R₂₅ unabhängig voneinander Wasserstoff oder C₁-C₁₈-Alkyl darstellen,
R₂₆ Wasserstoff oder C₁-C₈-Alkyl darstellt,
R₂₇ eine direkte Bindung, C₁-C₁₈-Alkylen, durch Sauerstoff, Schwefel oder 〉N―R₁₄ unterbrochenes C₂-C₁₈-Alkylen; C₂-C₁₈-Alkenylen, C₂-C₂₀-Alkyliden, C₇-C₂₀-Phenylalkyliden, C₅-C₈-Cycloalkylen, C₇-C₈-Bicycloalkylen, unsubstituiertes oder durch C₁-C₄-Alkyl substituiertes Phenylen, 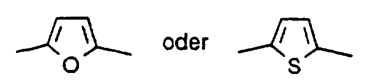 darstellt,
R₂₈ Hydroxy, 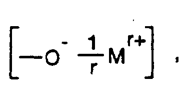 C₁-C₁₈-Alkoxy oder 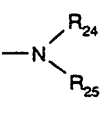 bedeutet,
R₂₉ Sauerstoff, -NH- oder 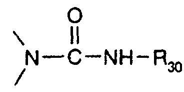 darstellt,
R₃₀ C₁-C₁₈-Alkyl oder Phenyl ist,
R₃₁ Wasserstoff oder C₁-C₁₈-Alkyl bedeutet,
M ein r-wertiges Metallkation ist,
X eine direkte Bindung, Sauerstoff, Schwefel oder -NR₃₁- darstellt,
n 1 oder 2 ist,
p 0, 1 oder 2 bedeutet,
q 1, 2, 3, 4, 5 oder 6 darstellt,
r 1, 2 oder 3 ist, und
s 0, 1 oder 2 bedeutet.

3. Pulverlackzusammensetzung gemäss Anspruch 1, worin die Komponente (b) eine Verbindung der Formel V 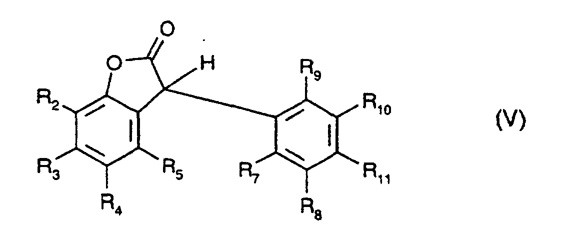 ist, worin
R₂ Wasserstoff oder C₁-C₆-Alkyl darstellt,
R₃ Wasserstoff bedeutet,
R₄ Wasserstoff, C₁-C₆-Alkyl oder einen Rest der Formel IIIa 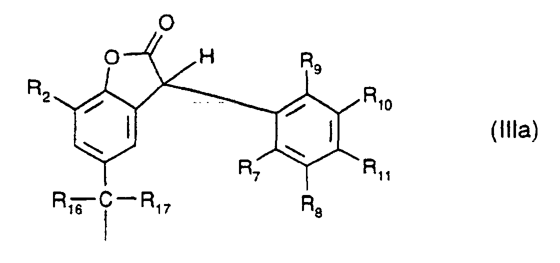 darstellt,
R₅ Wasserstoff bedeutet,
R₇, R₈, R₉ und R₁₀ unabhängig voneinander Wasserstoff, C₁-C₄-Alkyl oder C₁-C₄-Alkoxy darstellen,
R₁₁ Wasserstoff, C₁-C₄-Alkyl oder C₁-C₄-Alkoxy, C₂-C₈-Alkanoyloxy oder 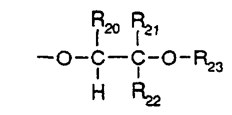 bedeutet, mit der Bedingung, dass mindestens zwei der Reste R₇, R₈, R₉, R₁₀ oder R₁₁ Wasserstoff sind;
R₁₆ und R₁₇ zusammen mit dem C-Atom, an das sie gebunden sind, einen unsubstituierten oder durch 1 bis 3 C₁-C₄-Alkyl substituierten Cyclohexylidenring bilden,
R₂₀, R₂₁ und R₂₂ Wasserstoff darstellen, und
R₂₃ C₂-C₁₈-Alkanoyl bedeutet.

4. Pulverlackzusammensetzung gemäss Anspruch 1, worin die Komponente (b) eine Verbindung der Formel V 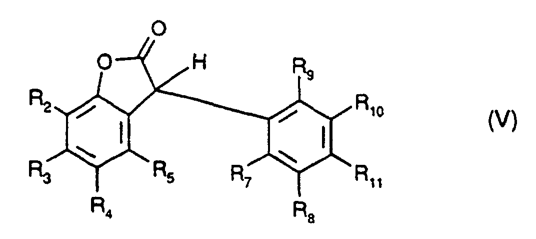 ist, worin
R₂ tert-Butyl darstellt,
R₃ Wasserstoff bedeutet,
R₄ tert-Butyl oder einen Rest der Formel IIIa 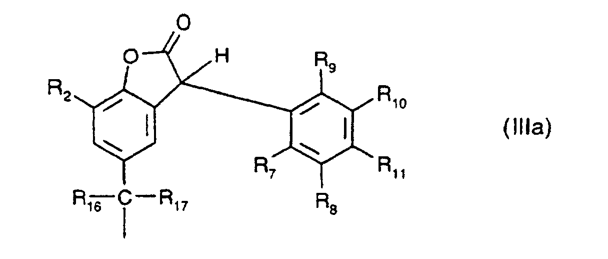 darstellt,
R₅ Wasserstoff bedeutet,
R₇, R₈, R₉ und R₁₀ unabhängig voneinander Wasserstoff, C₁-C₄-Alkyl oder C₁-C₄-Alkoxy darstellen,
R₁₁ Wasserstoff, C₁-C₄-Alkyl oder C₁-C₄-Alkoxy, C₂-C₈-Alkanoyloxy oder 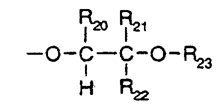 bedeutet, mit der Bedingung, dass mindestens zwei der Reste R₇, R₈, R₉, R₁₀ oder R₁₁ Wasserstoff sind;
R₁₆ und R₁₇ zusammen mit dem C-Atom, an das sie gebunden sind, einen Cyclohexylidenring bilden,
R₂₀, R₂₁ und R₂₂ Wasserstoff darstellen, und
R₂₃ C₂-C₁₈-Alkanoyl bedeutet.

5. Pulverlackzusammensetzung gemäss Anspruch 1, worin die Komponente (a) ein Epoxidharz, ein Polyester-Hydroxyalkylamid, ein Polyester-Glykoluril, ein Epoxid-Polyesterharz, ein Polyester-Triglycidylisocyanurat, ein hydroxyfuntionelles Polyester-blockiertes Polyisocyanat, ein hydroxyfunktionelles Polyester-Uretdion, ein Acrylatharz mit Härter oder eine Mischung solcher Harze ist.

6. Pulverlackzusammensetzung gemäss Anspruch 1, enthaltend neben den Komponenten (a) und (b) zusätzlich weitere Additive.

7. Pulverlackzusammensetzung gemäss Anspruch 6, enthaltend als weitere Additive zusätzlich eine oder mehrere Komponenten aus der Gruppe der Pigmente, Farbstoffe, Füllstoffe, Verlaufshilfsmittel, Entgasungsmittel, Ladungssteuermittel, optische Aufheller, Haftungsverbesserer, Antioxidantien, Lichtstabilisatoren, Härtungskatalysatoren, Photoinitiatoren, Benetzungshilfsmittel oder Korrosionsschutzmittel.

8. Pulverlackzusammensetzung gemäss Anspruch 6, enthaltend als weitere Additive phenolische Antioxidantien, sterisch gehinderte Amine, organische Phosphite oder Phosphonite; und/oder Thiosynergisten.

9. Pulverlackzusammensetzung gemäss Anspruch 1, worin die Komponente (b) in einer Menge von 0,001 bis 10 % bezogen auf das Gewicht der Komponente (a) vorliegt.

10. Bei der Härtung mit aus Verbrennungsgasen stammenden Stickoxiden in Kontakt stehende Pulverlackzusammensetzung enthaltend die Komponenten (a) und (b) gemäss Anspruch 1.

11. Verwendung der in Anspruch 1 definierten Komponente (b) zur Verminderung der Verfärbung von thermisch härtbaren Pulverlackzusammensetzungen (Einbrennlacken).

12. Verwendung gemäss Anspruch 11, worin die thermische Härtung in einem Gasofen durchgeführt wird.

13. Verfahren zur Verminderung der Verfärbung von thermisch härtbaren Pulverlackzusammensetzungen, **dadurch gekennzeichnet, dass** man diesen mindestens eine Komponente (b) gemäss Anspruch 1 einverleibt oder auf diese aufbringt.

14. Verfahren zum Härten von Pulverlackzusammensetzungen enthaltend die Komponenten (a) und (b) gemäss Anspruch 1, **dadurch gekennzeichnet, dass** die Härtung in einem Gasofen durchgeführt wird.

15. Nach den Verfahren gemäss Ansprüchen 13 oder 14 aufgebrachter und gehärteter Lackfilm.

## Claims

1. A powder coating composition comprising
a) an organic film-forming binder and
b) as stabilizer at least one compound of the benzofuran-2-one type.

2. A powder coating composition according to claim 1, in which component (b) is a compound of the formula I 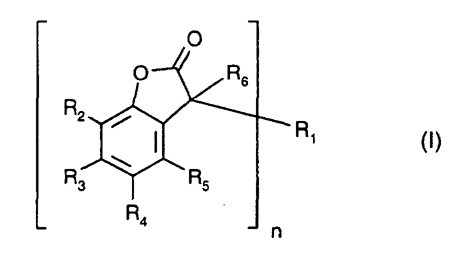 in which, if n is 1,
R, is unsubstituted or C₁-C₄alkyl-, C₁-C₄alkoxy-, C₁-C₄alkylthio-, hydroxyl-, halogen-, amino-, C₁-C₄alkylamino-, phenylamino- or di(C₁-C₄alkyl)amino-substituted naphthyl, phenanthryl, anthryl, 5,6,7,8-tetrahydro-2-naphthyl, 5,6,7,8-tetrahydro-1-naphthyl, thienyl, benzo[b]thienyl, naphtho[2,3-b]thienyl, thianthrenyl, dibenzofuryl, chromenyl, xanthenyl, phenoxathiinyl, pyrrolyl, imidazolyl, pyrazolyl, pyrazinyl, pyrimidinyl, pyridazinyl, indolizinyl, isoindolyl, indolyl, indazolyl, purinyl, quinolizinyl, isoquinolyl, quinolyl, phthalazinyl, naphthyridinyl, quinoxalinyl, quinazolinyl, cinnolinyl, pteridinyl, carbazolyl, β-carbolinyl, phenanthridinyl, acridinyl, perimidinyl, phenanthrolinyl, phenazinyl, isothiazolyl, phenothiazinyl, isoxazolyl, furazanyl, biphenyl, terphenyl, fluorenyl or phenoxazinyl, or R₁ is a radical of the formula II 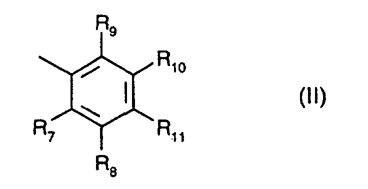 and,
if n is 2,
R₁ is unsubstituted or C₁-C₄alkyl- or hydroxyl-substituted phenylene or naphthylene; or is -R₁₂-X-R₁₃-,
R₂, R₃, R₄ and R₅ independently of one another are hydrogen, chlorine, hydroxyl, C₁-C₂₅-alkyl, C₇-C₉phenylalkyl, unsubstituted or C₁-C₄alkyl-substituted phenyl; unsubstituted or C₁-C₄alkyl-substituted C₅-C₈cycloalkyl; C₁-C₁₈alkoxy, C₁-C₁₈alkylthio, C₁-C₄alkylamino, di(C₁-C₄-alkyl)amino, C₁-C₂₅alkanoyloxy, C₁-C₂₅alkanoylamino, C₃-C₂₅alkenoyloxy, C₃-C₂₅-alkanoyloxy interrupted by oxygen, sulfur or 〉N―R₁₄ ; C₆-C₉cycloalkylcarbonyloxy, benzoyloxy or C₁-C₁₂alkyl-substituted benzoyloxy; or else the radicals R₂ and R₃ or the radicals R₃ and R₄ or the radicals R₄ and R₅ , together with the carbon atoms to which they are attached, form a benzo ring, R₄ is additionally -(CH₂)ₚ-COR₁₅ or -(CH₂)_{q}OH or, if R₃, R₅ and R₆ are hydrogen, R₄ is additionally a radical of the formula III 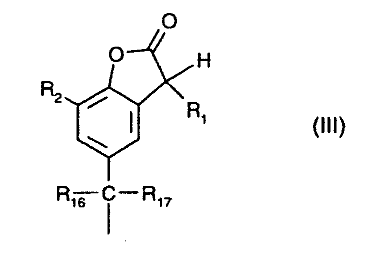 in which R₁ is as defined above for n = 1,
R₆ is hydrogen or a radical of the formula IV 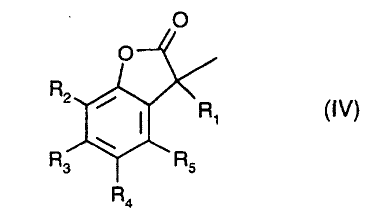 where R₄ is not a radical of the formula III and R₁ is as defined above for n = 1,
R₇, R₈, R₉, R₁₀ and R₁₁ independently of one another are hydrogen, halogen, hydroxyl, C₁-C₂₅alkyl, C₂-C₂₅alkyl interrupted by oxygen, sulfur or 〉N―R₁₄ ; C₁-C₂₅alkoxy, C₂-C₂₅-alkoxy interrupted by oxygen, sulfur or 〉N―R₁₄ ; C₁-C₂₅alkylthio, C₃-C₂₅alkenyl, C₃-C₂₅-alkenyloxy, C₃-C₂₅alkynyl, C₃-C₂₅alkynyloxy, C₇-C₉phenylalkyl, C₇-C₉phenylalkoxy, unsubstituted or C₁-C₄alkyl-substituted phenyl; unsubstituted or C₁-C₄alkyl-substituted phenoxy; unsubstituted or C₁-C₄alkyl-substituted C₅-C₈cycloalkyl; unsubstituted or C₁-C₄-alkyl-substituted C₅-C₈cycloalkoxy; C₁-C₄alkylamino, di(C₁-C₄alkyl)amino, C₁-C₂₅alkanoyl, C₃-C₂₅alkanoyl interrupted by oxygen, sulfur or 〉N―R₁₄ ; C₁-C₂₅alkanoyloxy, C₃-C₂₅-alkanoyloxy interrupted by oxygen, sulfur or 〉N―R₁₄ ; C₁-C₂₅alkanoylamino, C₃-C₂₅-alkenoyl, C₃-C₂₅alkenoyl interrupted by oxygen, sulfur or 〉N―R₁₄ ; C₃-C₂₅alkenoyloxy, C₃-C₂₅alkenoyloxy interrupted by oxygen, sulfur or 〉N―R₁₄ ; C₆-C₉cycloalkylcarbonyl, C₆-C₉cycloalkylcarbonyloxy, benzoyl or C₁-C₁₂alkyl-substituted benzoyl; benzoyloxy or C₁-C₁₂alkyl-substituted benzoyloxy; 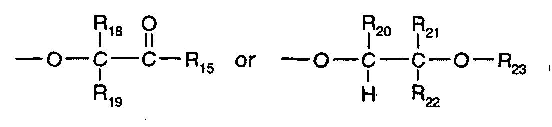 or else, in formula II, the radicals R₇ and R₈ or the radicals R₈ and R₁₁, together with the carbon atoms to which they are attached, form a benzo ring,
R₁₂ and R₁₃ independently of one another are unsubstituted or C₁-C₄alkyl-substituted phenylene or naphthylene,
R₁₄ is hydrogen or C₁-C₈alkyl,
R₁₅ is hydroxyl, 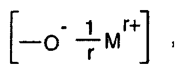 C₁-C₁₈alkoxy or 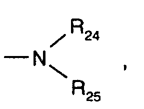 R₁₆ and R₁₇ independently of one another are hydrogen, CF₃, C₁-C₁₂alkyl or phenyl, or R₁₆ and R₁₇, together with the C atom to which they are attached, form an unsubstituted or mono- to tri-C₁-C₄alkyl-substituted C₅-C₈cycloalkylidene ring;
R₁₈ and R₁₉ independently of one another are hydrogen, C₁-C₄alkyl or phenyl,
R₂₀ is hydrogen or C₁-C₄alkyl,
R₂₁ is hydrogen, unsubstituted or C₁-C₄alkyl-substituted phenyl; C₁-C₂₅alkyl, C₂-C₂₅alkyl interrupted by oxygen, sulfur or 〉N―R₁₄ ; C₇-C₉phenylalkyl which is unsubstituted or substituted on the phenyl radical 1 to 3 times by C₁-C₄alkyl; C₇-C₂₅phenylalkyl which is interrupted by oxygen, sulfur or 〉N―R₁₄ and which is unsubstituted or substituted on the phenyl radical 1 to 3 times by C₁-C₄alkyl, or else the radicals R₂₀ and R₂₁, together with the carbon atoms to which they are attached, form an unsubstituted or mono- to tri-C₁-C₄alkyl-substituted C₅-C₁₂cycloalkylene ring;
R₂₂ is hydrogen or C₁-C₄alkyl,
R₂₃ is hydrogen, C₁-C₂₅alkanoyl, C₃-C₂₅alkenoyl, C₃-C₂₅alkanoyl interrupted by oxygen, sulfur or 〉N―R₁₄ ; C₂-C₂₅alkanoyl substituted by a di(C₁-C₆alkyl)phosphonate group; C₆-C₉cycloalkylcarbonyl, thenoyl, furoyl, benzoyl or C₁-C₁₂alkyl-substituted benzoyl; 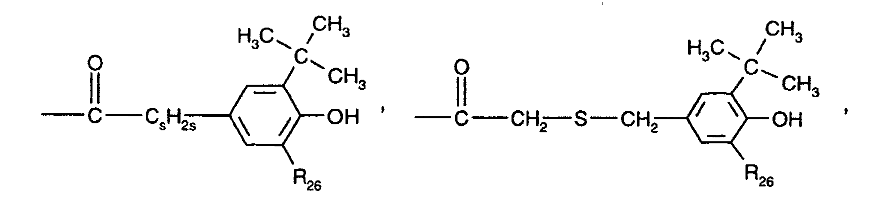 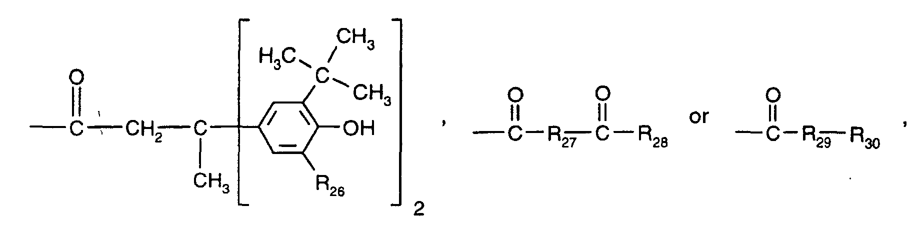 R₂₄ and R₂₅ independently of one another are hydrogen or C₁-C₁₈alkyl,
R₂₆ is hydrogen or C₁-C₈alkyl,
R₂₇ is a direct bond, C₁-C₁₈alkylene, C₂-C₁₈alkylene interrupted by oxygen, sulfur or 〉N―R₁₄ ; C₂-C₁₈alkenylene, C₂-C₂₀alkylidene, C₇-C₂₀phenylalkylidene, C₅-C₈-cycloalkylene, C₇-C₈bicycloalkylene, unsubstituted or C₁-C₄alkyl-substituted phenylene, 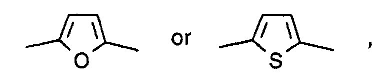 R₂₈ is hydroxyl, 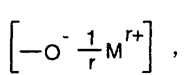 C₁-C₁₈alkoxy or 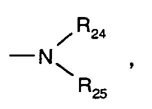 R₂₉ is oxygen, -NH- or 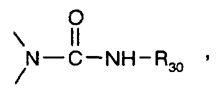 R₃₀ is C₁-C₁₈alkyl or phenyl,
R₃₁ is hydrogen or C₁-C₁₈alkyl,
M is an r-valent metal cation,
X is a direct bond, oxygen, sulfur or -NR₃₁-,
n is 1 or 2,
p is 0, 1 or 2,
q is 1, 2, 3, 4, 5 or 6,
r is 1, 2 or 3, and
s is 0, 1 or 2.

3. A powder coating composition according to claim 1, in which component (b) is a compound of the formula V 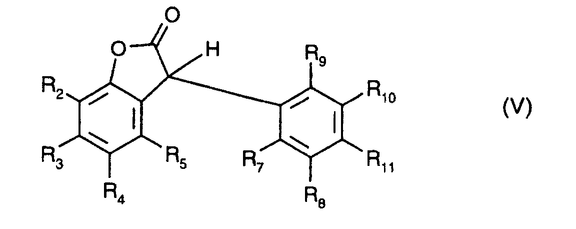 in which
R₂ is hydrogen or C₁-C₆alkyl,
R₃ is hydrogen,
R₄ is hydrogen, C₁-C₆alkyl or a radical of the formula IIIa 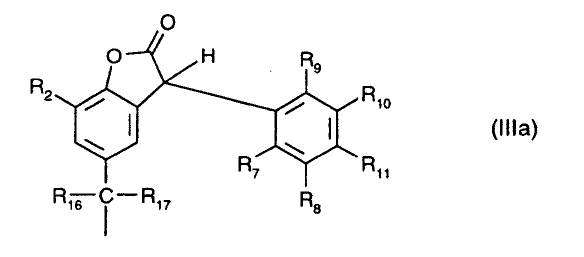 R₅ is hydrogen,
R₇, R₈, R₉ and R₁₀ independently of one another are hydrogen, C₁-C₄alkyl or C₁-C₄alkoxy,
R₁₁ is hydrogen, C₁-C₄alkyl or C₁-C₄alkoxy, C₂-C₈alkanoyloxy or 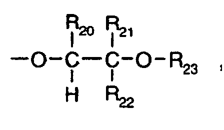 with the proviso that at least two of the radicals R₇, R₈, R₉, R₁₀ and R₁₁ are hydrogen;
R₁₆ and R₁₇, together with the C atom to which they are attached, form an unsubstituted or mono- to tri-C₁-C₄alkyl-substituted cyclohexylidene ring,
R₂₀, R₂₁ and R₂₂ are hydrogen, and
R₂₃ is C₂-C₁₈alkanoyl.

4. A powder coating composition according to claim 1, in which component (b) is a compound of the formula V 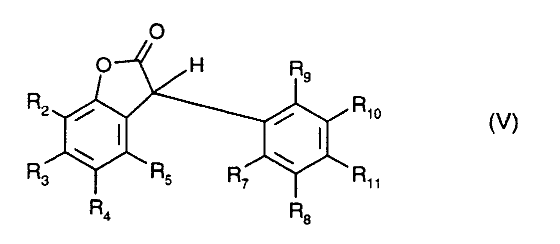 in which
R₂ is tert-butyl,
R₃ is hydrogen,
R₄ tert-butyl or a radical of the formula IIIa 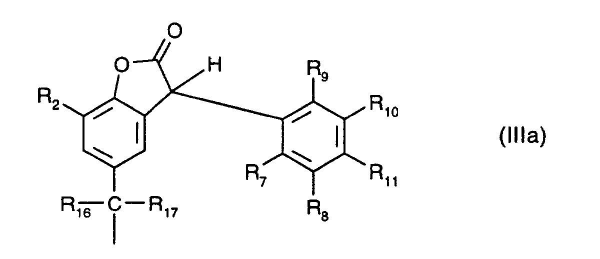 R₅ is hydrogen,
R₇, R₈, R₉ and R₁₀ independently of one another are hydrogen, C₁-C₄alkyl or C₁-C₄alkoxy,
R₁₁ is hydrogen, C₁-C₄alkyl or C₁-C₄alkoxy, C₂-C₈alkanoyloxy or 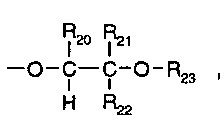 with the proviso that at least two of the radicals R₇, R₈, R₉, R₁₀ and R₁₁ are hydrogen;
R₁₆ and R₁₇, together with the C atom to which they are attached, form a cyclohexylidene ring,
R₂₀, R₂₁ and R₂₂ are hydrogen, and
R₂₃ is C₂-C₁₈alkanoyl.

5. A powder coating composition according to claim 1, in which component (a) is an epoxy resin, a polyester-hydroxyalkylamide, a polyester-glycoluril, an epoxy-polyester resin, a polyester-triglycidyl isocyanurate, a hydroxy-functional polyester-blocked polyisocyanate, a hydroxy-functional polyester-uretdione, an acrylate resin with hardener or a mixture of such resins.

6. A powder coating composition according to claim 1, comprising further additives in addition to components (a) and (b).

7. A powder coating composition according to claim 6, comprising as further additives, in addition, one or more components from the group consisting of pigments, dyes, fillers, levelling assistants, devolatilizing agents, charge control agents, optical brighteners, adhesion promoters, antioxidants, light stabilizers, curing catalysts, photoinitiators, wetting auxiliaries or corrosion protection agents.

8. A powder coating composition according to claim 6, comprising as further additives phenolic antioxidants, sterically hindered amines, organic phosphites or phosphonites; and/or thiosynergists.

9. A powder coating composition according to claim 1, in which component (b) is present in an amount of from 0.001 to 10% based on the weight of component (a).

10. A powder coating composition comprising components (a) and (b) according to claim 1 which in the course of curing is in contact with nitrogen oxides originating from combustion gases.

11. The use of component (b) as defined in claim 1 to reduce the discoloration of heat-curable powder coating compositions (stoving enamels).

12. The use according to claim 11, in which thermal curing is conducted in a gas oven.

13. A process for reducing the discoloration of heat-curable powder coating compositions, which comprises incorporating into or applying to these compositions at least one component (b) according to claim 1.

14. A process for curing powder coating compositions comprising components (a) and (b) according to claim 1, wherein curing is conducted in a gas oven.

15. A coating film applied and cured by a process according to claim 13 or 14.

## Revendications

1. Composition de peinture en poudre renfermant
a) un liant filmogène organique, et
b) en tant que stabilisant, au moins un composé de type benzofuran-2-ones.

2. Composition de peinture en poudre selon la revendication 1, où le composant (b) représente un composé de formule I 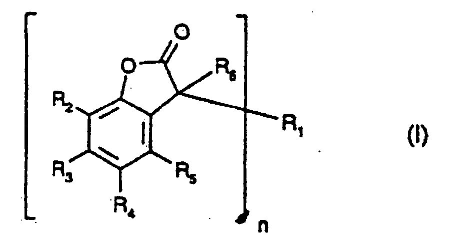 où,
lorsque n vaut 1,
R₁ représente un groupe naphtyle, phénanthryle, anthryle, 5,6,7,8-tétrahydro-2-naphtyle, 5,6,7,8-tétrahydro-1-naphtyle, thiényle, benzo[b]thiényle, naphto[2,3-b]thiényle, thianthrényle, dibenzofuryle, chroményle, xanthényle, phénoxathiinyle, pyrrolyle, imidazolyle, pyrazolyle, pyrazinyle, pyrimidinyle, pyridazinyle, indolizinyle, isoindolyle, indolyle, indazolyle, purinyle, quinolizinyle, isoquinolyle, quinolyle, phtalazinyle, naphtyridinyle, quinoxalinyle, quinazolinyle, cinnolinyle, ptéridinyle, carbazolyle, β-carbolinyle, phénanthridinyle, acridinyle, périmidinyle, phénanthrolinyle, phénazinyle, isothiazolyle, phénothiazinyle, isoxazolyle, furazanyle, biphényle, terphényle, fluorényle ou phénoxazinyle non substitué ou substitué par un substituant alkyle en C₁-C₄, alkoxy en C₁-C₄, (alkyl en C₁-C₄)thio, hydroxy, halogène, amino, (alkyl en C₁-C₄)amino, phénylamino ou di(alkyl en C₁-C₄)amino ou R₁ représente un reste de formule II 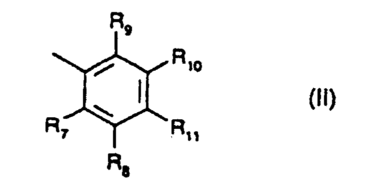
et,
lorsque n vaut 2,
R₁ représente un groupe phénylène ou naphtylène non substitué ou substitué par un substituant alkyle en C₁-C₄ ou hydroxy ; ou représente un groupement -R₁₂-X-R₁₃-,
R₂, R₃, R₄ et R₅ indépendamment les uns des autres représentent un atome d'hydrogène, un atome de chlore, un groupe hydroxy, alkyle en C₁-C₂₅, phénylalkyle en C₇-C₉, phényle non substitué ou substitué par un substituant alkyle en C₁-C₄ ; cycloalkyle en C₅-C₈ non substitué ou substitué par un substituant alkyle en C₁-C₄ ; alkoxy en C₁-C₁₈, (alkyl en C₁-C₁₈)-thio, (alkyl en C₁-C₄)-amino, di(alkyl en C₁-C₄)-amino, alcanoyloxy en C₁-C₂₅, (alkanoyl en C₁-C₂₅)amino alcénoyloxy en C₃-C₂₅, alcanoyloxy en C₃-C₂₅ interrompu par un atome d'oxygène, de soufre ou un groupe 〉N―R₁₄ ; cyclo(alkyl en C₆-C₉)-carbonyloxy, benzoyloxy ou benzoyloxy substitué par un substituant alkyle en C₁-C₁₂ ; ou de plus les restes R₂ et R₃ ou les restes R₃ et R₄ ou les restes R₄ et R₅ conjointement avec les atomes de carbone auxquels ils sont liés forment un cycle benzo, R₄ représente de plus un groupe -(CH₂)ₚ-COR₁₅ ou -(CH₂)_{q}OH, ou lorsque R₃, R₅ et R₆ représentent un atome d'hydrogène, R₄ représente de plus un reste de formule III 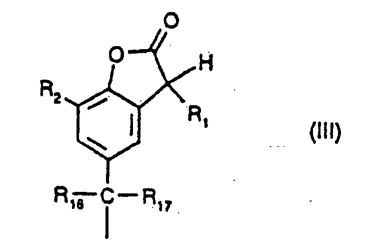
où R₁ est défini comme donné ci-dessus pour n = 1,
R₆ représente un atome d'hydrogène ou un reste de formule IV 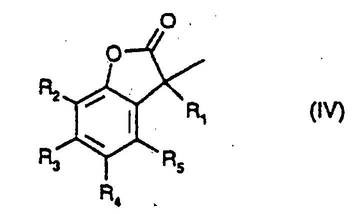
R₄ ne représente pas un reste de formule III et R, est défini comme ci-dessus pour n = 1,
R₇, R₈, R₉, R₁₀ et R₁₁ indépendamment les uns des autres représentent un atome d'hydrogène, un atome d'halogène, un groupe hydroxy, alkyle en C₁-C₂₅, alkyle en C₂-C₂₅ interrompu par un atome d'oxygène, de soufre ou un groupe 〉N―R₁₄ ; alkoxy en C₁-C₂₅, alkoxy en C₂-C₂₅ interrompu par un atome d'oxygène, de soufre ou un groupe 〉N―R₁₄ ; (alkyl en C₁-C₂₅)thio, alcényle en C₃-C₂₅, (alcényl en C₃-C₂₅)oxy, alcynyle en C₃-C₂₅, (alcynyl en C₃-C₂₅)oxy, phénylalkyle en C₇-C₉, phénylalkoxy en C₇-C₉, phényle non substitué ou substitué par un substituant alkyle en C₁-C₄ ; phénoxy non substitué ou substitué par un substituant alkyle en C₁-C₄ ; cycloalkyle en C₅-C₈ non substitué ou substitué par un substituant alkyle en C₁-C₄ ; cycloalkoxy en C₅-C₈ non substitué ou substitué par un substituant alkyle en C₁-C₄ ; (alkyl en C₁-C₄)amino, di(alkyl en C₁-C₄)amino, alcanoyle en C₁-C₂₅, alcanoyle en C₃-C₂₅ interrompu par un atome d'oxygène, de soufre ou un groupe 〉N―R₁₄ ; alcanoyloxy en C₁-C₂₅, alcanoyloxy en C₃-C₂₅ interrompu par un atome d'oxygène, de soufre ou un groupe 〉N―R₁₄ ; (alcanoyl en C₁-C₂₅)amino, alcénoyle en C₃-C₂₅, alcénoyle en C₃-C₂₅ interrompu par un atome d' oxygène, de soufre ou un groupe 〉N―R₁₄ ; alcénoyloxy en C₃-C₂₅, alcénoyloxy en C₃-C₂₅ interrompu par un atome d'oxygène, de soufre ou un groupe 〉N―R₁₄ ; (cycloalkyl en C₆-C₉)-carbonyle, (cycloalkyl en C₆-C₉)carbonyloxy, benzoyle ou benzoyle substitué par un substituant alkyle en C₁-C₁₂ ; benzoyloxy ou benzoyloxy substitué par un substituant alkyle en C₁-C₁₂ ; 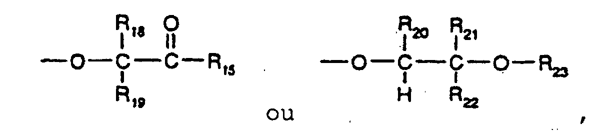 ou de plus, à la formule II, les restes R₇ et R₈ ou les restes R₈ et R₁₁ conjointement avec les atomes de carbone auxquels ils sont liés forment un cycle benzo,
R₁₂ et R₁₃ indépendamment l'un de l'autre représentent un groupe phénylène ou naphtylène non substitué ou substitué par un substituant alkyle en C₁-C₄,
R₁₄ représente un atome d'hydrogène ou un groupe alkyle en C₁-C₄ ;
R₁₅ représente un groupe hydroxy, 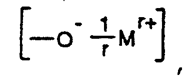 alkoxy en C₁-C₁₈ ou 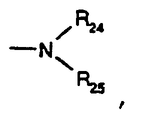
R₁₆ et R₁₇ indépendamment l'un de l'autre représentent un atome d'hydrogène, un groupe CF₃, alkyle en C₁-C₁₂ ou phényle, ou R₁₆ et R₁₇ conjointement avec les atomes de carbone auxquels ils sont liés forment un cycle cycloalkylidène en C₅-C₈ non substitué ou substitué par 1 à 3 substituants alkyle en C₁-C₄ ;
R₁₈ et R₁₉ indépendamment l'un de l'autre représentent un atome d'hydrogène, un groupe alkyle en C₁-C₄ ou phényle,
R₂₀ représente un atome d'hydrogène ou un groupe alkyle en C₁-C₄,
R₂₁ représente un atome d'hydrogène, un groupe phényle non substitué ou substitué par un substituant alkyle en C₁-C₄ ; alkyle en C₁-C₂₅, alkyle en C₂-C₂₅ interrompu par un atome d'oxygène, de soufre ou un groupe 〉N―R₁₄ ; phénylalkyle en C₇-C₉ non substitué ou substitué par 1 à 3 substituants alkyle en C₁-C₄ ; phénylalkyle en C₇-C₂₅ non substitué interrompu par un atome d'oxygène, de soufre ou un groupe 〉N―R₁₄ ou substitué sur le reste phényle par 1 à 3 substituants alkyle en C₁-C₄, ou de plus les restes R₂₀ et R₂₁ conjointement avec les atomes de carbone auxquels ils sont lié forment un cycle cycloalkylène en C₅-C₁₂ non substitué ou substitué par 1 à 3 substituants alkyle en C₁-C₄ ;
R₂₂ représente un atome d'hydrogène ou un groupe alkyle en C₁-C₄ ;
R₂₃ représente un atome d'hydrogène, un groupe alcanoyle en C₁-C₂₅, alcénoyle en C₃-C₂₅, alcanoyle en C₃-C₂₅ interrompu par un atome d'oxygène, de soufre ou un groupe 〉N―R₁₄ ; alcanoyle en C₂-C₂₅ substitué par un groupe di(alkyl en C₁-C₆)-phosphonato ; cyclo(alkyl en C₆-C₉)carbonyle, thénoyle, furoyle, benzoyle ou benzoyle substitué par un substituant alkyle en C₁-C₁₂ ; 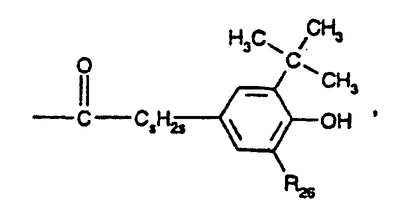 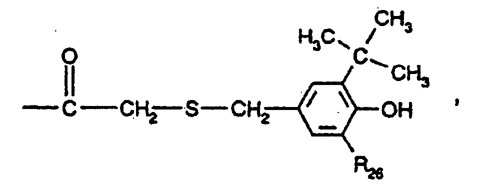 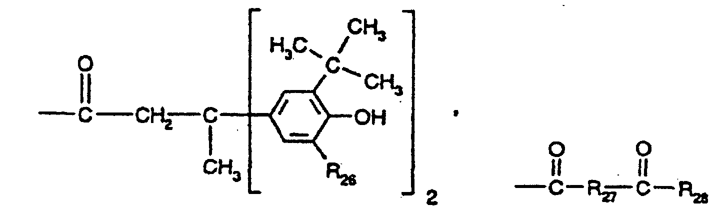 ou 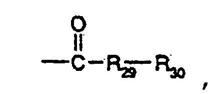
R₂₄ et R₂₅ indépendamment l'un de l'autre représentent un atome d'hydrogène ou un groupe alkyle en C₁-C₁₈ ;
R₂₆ représente un atome d'hydrogène ou un groupe alkyle en C₁-C₈ ;
R₂₇ représente une liaison directe, un groupe alkylène en C₁-C₁₈, alkylène en C₂-C₁₈ interrompu par un atome d'oxygène, de soufre ou un groupe 〉N―R₁₄ ; alcénylène en C₂-C₁₈, alkylidène en C₂-C₂₀, phénylalkylidène en C₇-C₂₀, cycloalkylène en C₅-C₈, bicycloalkylène en C₇-C₈, phénylène non substitué ou substitué par un substituant alkyle en C₁-C₄, 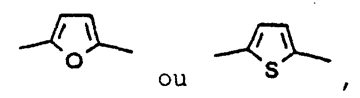
R₂₈ représente un groupe hydroxy, 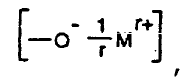 alkoxy en C₁-C₁₈ ou 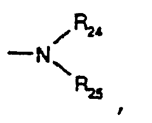
R₂₉ représente un atome d'oxygène, un groupe -NH- ou 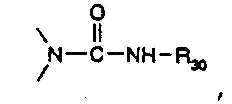
R₃₀ représente un groupe alkyle C₁-C₁₈ ou phényle,
R₃₁ représente un atome d'hydrogène ou un groupe alkyle C₁-C₁₈ ;
M représente un cation métal avec une valencé r,
X représente une liaison directe, un atome d'oxygène, un atome de soufre ou un groupe -NR₃₁-,
n vaut 1 ou 2,
p vaut 0, 1 ou 2,
q vaut 1, 2, 3, 4, 5 ou 6,
r vaut 1, 2 ou 3, et
s vaut 0, 1 ou 2.

3. Composition de peinture en poudre selon la revendication 1, où le composant (b) est un composé de formule V 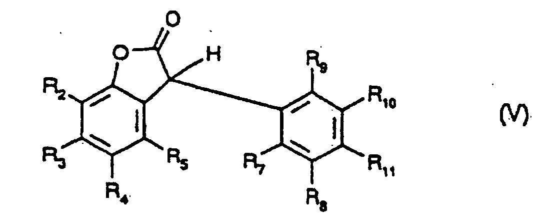 où
R₂ représente un atome d'hydrogène ou un groupe alkyle C₁-C₆ ;
R₃ représente un atome d'hydrogène,
R₄ représente un atome d'hydrogène, un groupe alkyle C₁-C₆ un reste de formule IIIa 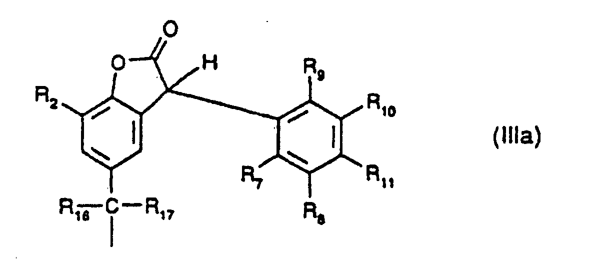
où
R₅ représente un atome d'hydrogène,
R₇, R₈, R₉ et R₁₀ indépendamment les uns des autres représentent un atome d'hydrogène, un groupe alkyle en C₁-C₄ ou alkoxy en C₁-C₄,
R₁₁ représente un atome d'hydrogène, un groupe alkyle en C₁-C₄ ou alkoxy en C₁-C₄, alcanoyloxy en C₂-C₈ ou 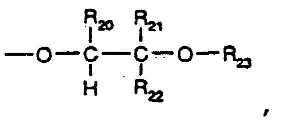 à condition qu'au moins deux des restes R₇, R₈, R₉, R₁₀ ou R₁₁ soient un atome d'hydrogène ;
R₁₆ et R₁₇ avec l'atome de carbone auquel ils sont liés, forment un cycle cyclohexylidène non substitué ou substitué par un 1 à 3 substituants alkyle en C₁-C₄, et
R₂₀, R₂₁ et R₂₂ représentent un atome d'hydrogène, et
R₂₃ représente un groupe alcanoyle en C₂-C₁₈.

4. Composition de peinture en poudre selon la revendication 1, où le composant (b) représente un composé de formule V 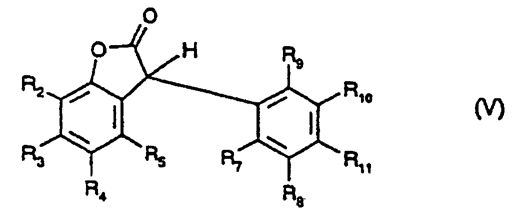 où
R₂ représente un groupe tert-butyle,
R₃ représente un atome d'hydrogène,
R₄ représente un groupe tert-butyle ou un reste de formule IIIa 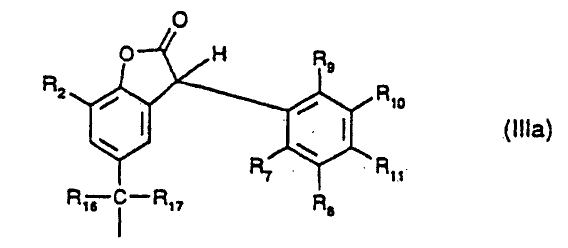
R₅ représente un atome d'hydrogène,
R₇, R₈, R₉ et R₁₀ indépendamment les uns des autres un atome représentent d'hydrogène, un groupe alkyle en C₁-C₄ ou alkoxy en C₁-C₄,
R₁₁ représente un atome d'hydrogène, un groupe alkyle en C₁-C₄ ou alkoxy en C₁-C₄, alcanoyloxy en C₂-C₈
ou 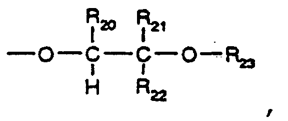 à condition qu'au moins deux des restes R₇, R₈, R₉, R₁₀ ou R₁₁ soient un atome d'hydrogène ;
R₁₆ et R₁₇ conjointement avec l'atome de carbone auquel ils sont liés, forment un cycle cyclohexylidène et
R₂₀, R₂₁ et R₂₂ représentent un atome d'hydrogène, et
R₂₃ représente un groupe alcanoyle en C₂-C₁₈.

5. Composition de peinture en poudre selon la revendication 1, où le composant (a) est une résine époxyde, un polyester-hydroxyalkylamide, un polyester-glycolurile, une résine époxyde-polyester, un polyester-isocyanurate de triglycidyle, un polyisocyanate bloqué par un polyester à fonctionnalité hydroxy, une polyester-urétdione à fonctionnalité hydroxy, une résine acrylique avec durcisseur ou un mélange de telles résines.

6. Composition de peinture en poudre selon la revendication 1, renfermant au côté des composants (a) et (b) d'autres additifs supplémentaires.

7. Composition de peinture en poudre selon la revendication 6 renfermant en plus, en tant que des additifs supplémentaires, un ou plusieurs composants pris dans le groupe comprenant des pigments, des colorants, des charges, des agents d'unisson, des agents de dégazage, des agents de contrôle de charge, des azurants optiques, des agents améliorant d'accrochage, des antioxydants, des stabilisants à la lumière, des catalyseurs de durcissement, des photoamorceurs, des adjuvants de mouillage et agents protecteurs contre la corrosion.

8. Composition de peinture en poudre selon la revendication 6 renfermant, en tant que des additifs supplémentaires, des antioxydants phénoliques, des amines à empêchement stérique, des phosphites ou phosphonites organiques et/ou des agents de thiosynergie.

9. Composition de peinture en poudre selon la revendication 1, où le composant (b) est présent dans une quantité de 0,001 à 10 % par rapport au poids du composant (a).

10. Composition de peinture en poudre, renfermant les composant (a) et (b) selon la revendication 1, qui est en contact avec les oxydes d'azote provenant des gaz de combustion au cours du durcissement.

11. Utilisation du composant (b) défini à la revendication 1 pour la diminution de la décoloration des compositions de peinture en poudre thermodurcissables (peinture à sécher au four).

12. Utilisation selon la revendication 11, où le durcissement thermique est mis en oeuvre d'un four à gaz.

13. Procédé pour la diminution de la décoloration des compositions de peinture en poudre thermodurcissables, **caractérisé en ce qu'**on incorpore à celles-ci ou on dépose sur celles-ci au moins un composant (b) selon la revendication 1.

14. Procédé pour le durcissement de compositions des peintures en poudre renfermant les composant (a) et (b) selon la revendication 1, **caractérisé en ce qu'**on réalise le durcissement dans un four à gaz.

15. Pellicule de peinture déposée ou durcie selon le procédé selon les revendications 13 ou 14.
